(19) Europäisches Patentamt
European Patent Office
Office européen des brevets

(11) **EP 1 626 516 B1**

(12) **EUROPÄISCHE PATENTSCHRIFT**

(45) Veröffentlichungstag und Bekanntmachung des Hinweises auf die Patenterteilung:
**17.01.2007 Patentblatt 2007/03**

(51) Int Cl.:
*H04L 1/00* (2006.01)    *H04L 27/26* (2006.01)
*H04B 17/00* (2006.01)

(21) Anmeldenummer: **05015160.4**

(22) Anmeldetag: **12.07.2005**

(54) **Verfahren zur Ermittlung von Offset-Fehlern in Modulatoren und Demodulatoren**

Method for determining offset errors of modulators and demodulators

Procédé pour la détermination des erreurs de décalage de modulateurs et de démodulateurs

(84) Benannte Vertragsstaaten:
**DE FR GB**

(30) Priorität: **13.08.2004 DE 102004039440**

(43) Veröffentlichungstag der Anmeldung:
**15.02.2006 Patentblatt 2006/07**

(73) Patentinhaber: **Rohde & Schwarz GmbH & Co. KG**
**81671 München (DE)**

(72) Erfinder:
- **Eckert, Hagen**
  **86415 Mering (DE)**

- **Pliquett, Jochen**
  **76571 Gaggenau (DE)**

(74) Vertreter: **Körfer, Thomas et al**
**Mitscherlich & Partner**
**Patent- und Rechtsanwälte**
**Sonnenstrasse 33**
**80331 München (DE)**

(56) Entgegenhaltungen:
**EP-A- 0 503 588**      **DE-A1- 10 234 166**
**US-A1- 2002 018 531**

**Beschreibung**

Die Erfindung betrifft ein Verfahren zur Ermittlung von Offset-Fehlern in Modulatoren und Demodulatoren.

Das Übertragungsverhalten von Modulatoren und Demodulatoren ist durch lineare und nichtlineare Verzerrungsfehler gekennzeichnet. Während die nichtlinearen Verzerrungen zu Höherharmonischen am Ausgangssignal des Modulators bzw. des Demodulators führen, bewirken lineare Verzerrungen Amplituden- und Phasenänderungen am Ausgangssignal in Relation zum Eingangssignal des Modulators bzw. Demodulators. Die wesentlichen linearen Verzerrungsfehler in Modulatoren bzw. in Demodulatoren sind unterschiedliche Verstärkungsfaktoren und Offset-Fehler im Inphase-Kanal in Relation zum Quadratur-Kanal bzw. eine fehlende orthogonale Phasenbeziehung zwischen dem Inphase- und dem Quadratur-Signal (Quadraturfehler).

Zur Kompensation derartiger unerwünschter Verzerrungen ist eine exakte Ermittlung der einzelnen Verzerrungsfehler erforderlich. In der DE 102 34 166 A1 ist ein Verfahren vorgestellt, das auf Basis der Maximum-Liekelihood-Schätzung (ML-Schätzung) derartige Verzerrungsfehler an einem OFDM-Signal, hervorgerufen durch lineare Verzerrungen im Quadratur-Modulator und in der Übertragungsstrecke, bestimmt. Durch Minimierung der quadratischen Signaldifferenz zwischen einem über einen Beobachtungszeitraum gemessenen rauschbehafteten Signal am Ausgang der Übertragungsstrecke und einem dazu korrespondierenden rauschfreien Signal wird hierbei eine nichtlineare Gleichung erzeugt, dessen iterativ ermittelte Lösung der gesuchte Quadraturfehler bzw. der gesuchte Verstärkungsfaktor-Unterschied zwischen Inphase-und Quadratur-Kanal (Imbalance-Fehler) des Modulators bzw. der Übertragungsstrecke darstellt.

Nachteilig am in der DE 102 34 166 A1 dargestellten Verfahren ist die fehlende Möglichkeit, unterschiedliche Offsetfehler zwischen Inhase- und Quadratur-Kanal zu identifizieren und anschließend über ein korrespondierendes Kompensationssignal zu beseitigen.

Der Erfindung liegt daher die Aufgabe zugrunde, ein Verfahren zu schaffen, mit dem auch die im Inphase- und dem Quadratur-Kanal auftretenden Offset-Fehler als Quelle von Amplitudenverzerrungen am Inphase- bzw. Quadratur-Signal in Modulatoren und in Demodulatoren ermittelt werden.

Die Aufgabe wird durch ein Verfahren zu Ermittlung von Signalfehlern in Modulatoren und Demodulatoren nach Anspruch 1 gelöst. Vorteilhafte Ausgestaltungen der Erfindung sind in den abhängigen Ansprüchen angegeben.

Auf der Basis der Maximum-Likelihood-Schätzung wird die Signaldifferenz zwischen einem rauschbehafteten, am Ausgang des Modulators bzw. des Demodulators über einen Beobachtungszeitraum gemessenen Signal und einem dazu korrespondierenden rauschfreien Signal minimiert. Die Modellierung der Signaldifferenz beinhaltet die Struktur und die Parameter der Übertragungsstrecke des Modulators bzw. des Demodulators und damit auch die in der Übertragungsstrecke des Modulators bzw. des Demodulators auftretenden linearen Verzerrungsfehler. Die Minimierung des Signaldifferenz führt zu einem linearen Gleichungssystem, dessen numerisch ermittelter Lösungsvektor die jeweils gesuchten linearen Verzerrungsfehler, insbesondere den im Inphase- und Quadratur-Kanal auftretenden Offset-Fehler, darstellt.

Wird der Beobachtungszeitraum zur Messung des rauschbehafteten Signals am Ausgang des Modulators bzw. Demodulators einem ganzzahligen Vielfachen des Verhältnisses $2*\pi$/Differenzkreisfrequenz des Mischers gewählt, so vereinfacht sich das lineare Gleichungssystem sehr deutlich. Die Systemmatrix $\overline{A}$ des linearen Gleichungssystems geht in die Einheitsmatrix über, der Vektor $\underline{b}$ der rechten Gleichungsseite des linearen Gleichungssystems enthält die diskreten Fourier-Transformation des rauschbehafteten Signals am Ausgang des Modulators bzw. des Demodulators bei drei Kreisfrequenzen (negative Differenzkreisfrequenz des Mischers, Null und positive Differenzkreisfrequenzen des Mischers).

Ein Ausführungsbeispiel des Verfahrens zur Ermittlung von Signalfehlern in Modulatoren und in Demodulatoren wird nachfolgend unter Bezugnahme auf die Zeichnung näher erläutert. In der Zeichnung zeigen:

Fig. 1   ein komplexes Basisband-Modell eines Demodulators,

Fig. 2   ein Flußdiagramm des erfindungsgemäßen Verfahrens zur Ermittlung von Signalfehlern in einem Demodulator,

Fig. 3   ein komplexes Basisband-Modell eines Modulators,

Fig. 4   ein Flußdiagramm des erfindungsgemäßen Verfahrens zur Ermittlung von Signalfehlern in einem Modulator,

Fig. 5   ein Gleichungssystem aus der partiellen Differentiation des quadratischen Betrags der Signaldifferenz und

Fig. 6   ein Gleichungssystem aus über dem Beobachtungszeitraum integrierten partiellen Differentiation des quadratischen Betrags der Signaldifferenz.

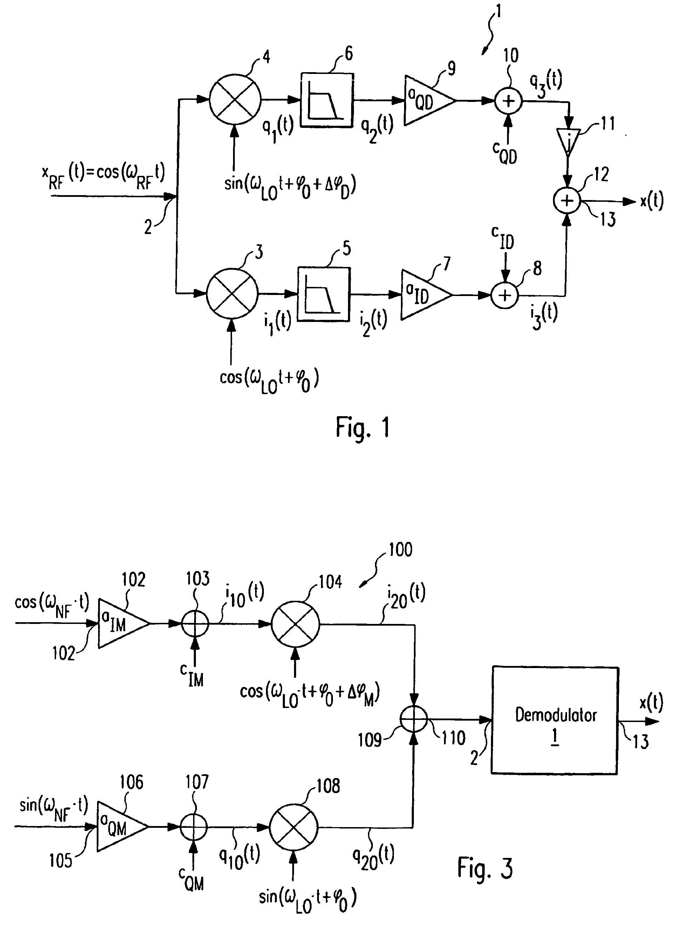

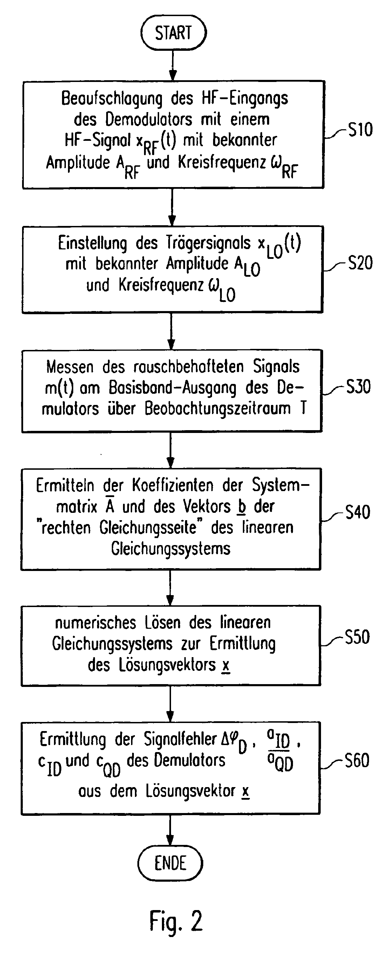

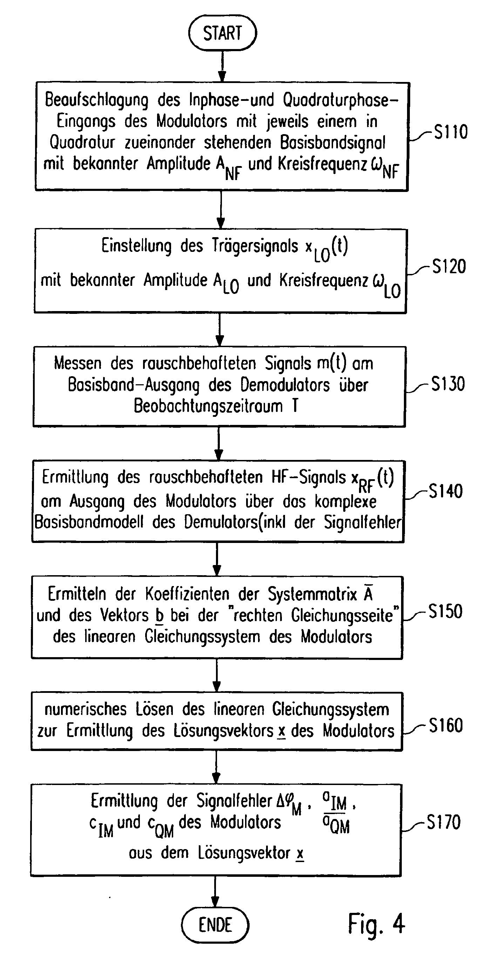

Bevor auf die detaillierte Beschreibung des erfindungsgemäßen Verfahrens zur Ermittlung von Signalfehlern in Modulatoren und Demodulatoren gemäß Fig. 2 und 4 eingegangen wird, erfolgt im folgenden die Herleitung der erforderlichen mathematischen Grundlagen anhand des komplexen Basisbandmodells des Demodulators in Fig. 1 und des komplexen Basisbandmodells des Modulators in Fig. 3.

Das komplexe Basisbandmodell 1 des Demodulators in Fig. 1 wird an seinem Hochfrequenz-Eingang 2 mit einem Hochfrequenz-Signal $x_{RF}(t) = \cos(\omega_{RF}*t)$ mit einer normierten Amplitude $A_{RF}$ von Eins und einer hochfrequenten Kreisfrequenz $\omega_{RF}$ angeregt. Das Hochfrequenz-Signal $\cos(\omega_{RF}*t)$ wird in einer ersten Mischerstufe 3 mit einem ersten Trägersignal $\cos(\omega_{LO}*t+\varphi_0)$ mit einer normierten Amplitude $A_{LO}$ von Eins, einer Trägerkreisfrequenz $\omega_{LO}$ und einer Anfangsphase $\varphi_0$ in das Basisband heruntergemischt. Die Anfangsphase $\varphi_0$ gibt den unbestimmten Phasenzustand des ersten Trägersignals $\cos(\omega_{LO}*t+\varphi_0)$ zum Zeitpunbkt t=0 an. Das Hochfrequenz-Signal $\cos(\omega_{RF}*t)$ könnte analog eine Anfangsphase $\varphi_0$ aufweisen. Da die Anfangsphase $\varphi_0$ von Hochfrequenz-Signal und erstem Trägersignal nicht gleichzeitig bestimmt werden kann, wird die Anfangsphase $\varphi_0$ des Hochfrequenzsignals ohne Beschränkung der Allgemeinheit zu Null angenommen. Das Inphase-Signal $i_1(t)$ am Ausgang der ersten Mischerstufe 3 ergibt sich gemäß Gleichung (1).

$$i_1(t) = \cos(\omega_{RF}\cdot t) \cdot \cos(\omega_{LO}t + \varphi_0)$$
$$= \frac{1}{2}\left(e^{j\omega_{RF}t} + e^{-j\omega_{RF}t}\right) \cdot \frac{1}{2}\left(e^{j(\omega_{LO}t+\varphi_0)} + e^{-j(\omega_{LO}t+\varphi_0)}\right) \qquad (1)$$
$$= \frac{1}{4}\left[e^{j\left(+(\omega_{RF}+\omega_{LO})t+\varphi_0\right)} + e^{j\left(+(\omega_{RF}-\omega_{LO})t-\varphi_0\right)} + e^{j\left(-(\omega_{RF}-\omega_{LO})t+\varphi_0\right)} + e^{j\left(-(\omega_{RF}+\omega_{LO})t-\varphi_0\right)}\right]$$

Ganz analog wird das Hochfrequenz-Signal $\cos(\omega_{RF}*t)$ in einer zweiten Mischerstufe 4 mit einem zum ersten Trägersignal der ersten Mischerstufe 3 in Quadratur stehenden zweiten Trägersignal $\sin(\omega_{LO}*t+\varphi_0+\Delta\varphi_D)$ in das Basisband heruntergemischt. Das zweite Trägersignal $\sin(\omega_{LO}*t+\varphi_0+\Delta\varphi_D)$ weist in seiner Phasenbeziehung zum ersten Trägersignal $\cos(\omega_{LO}*t+\varphi_0)$ zusätzlich zur Quadratur einen Quadraturfehler $\Delta\varphi_D$ auf. Das Quadratur-Signal $q_1(t)$ am Ausgang der zweiten Mischerstufe 4 ergibt sich gemäß Gleichung (2).

$$q_1(t) = \cos(\omega_{RF}\cdot t) \cdot \sin(\omega_{LO}t + \varphi_0 + \Delta\varphi_D)$$
$$= \frac{1}{2}\left(e^{j\omega_{RF}t} + e^{-j\omega_{RF}t}\right) \cdot \frac{1}{2j}\left(e^{+j(\omega_{LO}t+\varphi_0+\Delta\varphi_D)} - e^{-j(\omega_{LO}t+\varphi_0+\Delta\varphi_D)}\right) \qquad (2)$$
$$= \frac{1}{4j}\left[\begin{array}{l} e^{j\left(+(\omega_{RF}+\omega_{LO})t+\varphi_0+\Delta\varphi_D\right)} - e^{j\left(+(\omega_{RF}-\omega_{LO})t-\varphi_0-\Delta\varphi_D\right)} + e^{j\left(-(\omega_{RF}-\omega_{LO})t+\varphi_0+\Delta\varphi_D\right)} - \\ -e^{j\left(-(\omega_{RF}+\omega_{LO})t-\varphi_0-\Delta\varphi_D\right)} \end{array}\right]$$

Das Inphase-Signal $i_1(t)$ wird im ersten Tiefpaß 5, das Quadratur-Signal $q_1(t)$ im zweiten Tiefpaß 6 einer Tiefpaßfilterung unterzogen, in denen jeweils die additiven Mischprodukte der Kreisfrequenzen $\pm(\omega_{RF}+\omega_{LO})$ unterdrückt werden und lediglich die tieferfrequenten subtraktiven Mischprodukte der Kreisfrequenzen $\pm(\omega_{RF}-\omega_{LO})$ am Ausgang des ersten bzw. zweiten Tiefpaßfilters 5 bzw. 6 anliegen. Die beiden Tiefpässe 5 und 6 weisen einen identischen Frequenz- und Phasengang auf, da andernfalls eine zusätzliche Gain-Imbalance entsteht. Zur weiteren Behandlung wird gemäß Gleichung (3) die Kreisfrequenz $\omega_0$ als subtraktives Mischprodukt der Kreisfrequenzen $(\omega_{RF}-\omega_{LO})$ eingeführt.

$$\omega_0 = \omega_{RF} - \omega_{LO}$$
$$(3)$$

Das Inphase-Signal $i_2(t)$ am Ausgang des ersten Tiefpaßfilters 5 ergibt sich folglich gemäß Gleichung (4).

$$i_2(t) = \frac{1}{4} \cdot \left[ e^{j(\omega_0 t - \varphi_0)} + e^{j(-\omega_0 t + \varphi_0)} \right] \tag{4}$$

Analog ergibt sich das Quadratur-Signal $q_2(t)$ am Ausgang des zweiten Tiefpaßfilters 6 gemäß Gleichung (5).

$$q_2(t) = \frac{1}{4j} \cdot \left[ -e^{j(\omega_0 t - \varphi_0 - \Delta\varphi_D)} + e^{j(-\omega_0 t + \varphi_0 + \Delta\varphi_D)} \right] \tag{5}$$

Das Inphase-Signal $i_2(t)$ wird in einem ersten Verstärker 7 mit einem positiven, reellwertigen Verstärkungsfaktr $a_{ID}$ verstärkt und in einem ersten Summierglied 8 mit einem Gleichspannungs-Offset $c_{ID}$ additiv überlagert, so daß am Ausgang des ersten Summiergliedes 8 ein Inphase-Signal $i_3(t)$ gemäß Gleichung (6) anliegt.

$$i_3(t) = \frac{a_{ID}}{4} \cdot \left[ e^{j(\omega_0 t - \varphi_0)} + e^{j(-\omega_0 t + \varphi_0)} \right] + c_{ID} = \frac{a_{ID}}{2} \cdot \cos(\omega_0 t - \varphi_0) + c_{ID}$$
$$\tag{6}$$

Das Quadratur-Signal $q_2(t)$ wird in einem zweiten Verstärker 9 mit einem positiven, reellwertigen Verstärkungsfaktor $a_{QD}$ verstärkt und in einem zweiten Summierglied 10 mit einem Gleichspannungs-Offset $c_{QD}$ additiv überlagert, so daß am Ausgang des zweiten Summiergliedes 10 ein Quadratur-Signal $q_3(t)$ gemäß Gleichung (7) anliegt.

$$q_3(t) = \frac{a_{QD}}{4j} \cdot \left[ -e^{j(\omega_0 t - \varphi_0 - \Delta\varphi_D)} + e^{j(-\omega_0 t + \varphi_0 + \Delta\varphi_D)} \right] + c_{QD}$$
$$= -\frac{a_{QD}}{2} \cdot \sin(\omega_0 t - \varphi_0 - \Delta\varphi_D) + c_{QD} \tag{7}$$

Die beiden reellen Signale $i_3(t)$ und $q_3(t)$ werden im komplexen Basisbandmodell 1 des Demodulators durch Multiplikation des Quadratur-Signal $q_3(t)$ in einem Multiplizierer 11 mit der imaginären Einheit j und anschliessender Addition zum Inphase-Signal $i_3(t)$ in einem Addierer 12 zum komplexen Ausgangssignal x(t) am Ausgang 13 des komplexen Basisbandmodells 1 des Demodulators gemäß Gleichung (8) addiert.

$$x(t) := i_3(t) + j \cdot q_3(t)$$

Gleichung (8) kann unter Berücksichtigung der mathematischen Beziehungen der Gleichungen (6) und (7) in Gleichung (9) übergeführt werden.

$$x(t) =$$
$$\frac{1}{4} \left[ a_{ID} - a_{QD} \cdot e^{-j\Delta\varphi_D} \right] \cdot e^{j(\omega_0 t - \varphi_0)} + \frac{1}{4} \left[ a_{ID} + a_{QD} \cdot e^{j\Delta\varphi_D} \right] \cdot e^{-j(\omega_0 t - \varphi_0)} + \left[ c_{ID} + jc_{QD} \right]$$
$$\tag{9}$$

Werden für die komplexen Terme in Gleichung (9) die komplexen Konstanten $A_D$, $B_D$ und $C_D$ gemäß der Gleichungen (10), (11) und (12) eingeführt, so geht Gleichung (9) in Gleichung (13) über.

$$A_D = \frac{1}{4} \cdot (a_{ID} - a_{QD} \cdot e^{-j\varphi_D}) \cdot e^{-j\varphi_D} = A_{ID} + jA_{QD} \qquad (10)$$

$$B_D = \frac{1}{4} \cdot (a_{ID} + a_{QD} \cdot e^{j\varphi_D}) \cdot e^{j\varphi_D} = B_{ID} + jB_{QD} \qquad (11)$$

$$C_D = c_{ID} + jc_{QD} \qquad (12)$$

$$x(t) = A_D \cdot e^{j\omega_0 t} + B_D \cdot e^{-j\omega_0 t} + C_D \qquad (13)$$

Das Ausgangssignal x(t) enthält folglich zwei komplexe Drehzeiger, die gegenläufig jeweils mit der Kreisfrequenz $\omega_0$ rotieren.

Die Fourier-Transformierte X(f) des Ausgangssignals x(t) aus Gleichung (13) ergibt sich gemäß Gleichung (14) als Addition dreier Spektrallinien bei den Kreisfrequenzen $-\omega_0$, 0 und $+\omega_0$.

$$X(f) = A_D \cdot \delta(\omega - \omega_0) + B_D \cdot \delta(\omega + \omega_0) + C_D \cdot \delta(\omega) \qquad (14)$$

Die komplexen Konstanten $A_D$, $B_D$ und $C_D$ in Gleichung (13) für das Ausgangssignal x(t) und in Gleichung (14) für die zugehörige Fourier-Transformierte X(f) enthalten gemäß Gleichung (10) bis (12) die im komplexen Basisbandmodell 1 des Demodulators auftretenden Signalfehler:

• Quadraturfehler $\Delta\varphi_D$,

• Gain Imbalance, d.h. das Verhältnis der Verstärkungsfaktoren für das Inphase- zum Quadratur-Signal $\frac{a_{ID}}{a_{QD}}$ ,

• Gleichspannungs-Offsetfehler des Inphase- und Quadratur-Signals $c_{ID}$ und $c_{QD}$.

Die komplexen Konstanten $A_D$, $B_D$ und $C_D$ in Gleichung (13) stellen die komplexen Spektrallinien der Fourier-Transformierten des Ausgangssignals x(t) bei den Kreisfrequenzen $-\omega_0$, 0 und $+\omega_0$ dar. Sind die spektralen Kreisfrequenzen $-\omega_0$, 0 und $+\omega_0$ bekannt, so können durch Bestimmung der zugehörigen komplexen Spektrallinien $A_D$, $B_D$ und $C_D$ die einzelnen Signalfehler im komplexen Basisbandmodell 1 des Demodulators ermittelt werden.

Die Gleichspannungs-Offsetfehler $c_{ID}$ und $c_{QD}$ ergeben sich trivial als Realteil bzw. Imaginärteil der komplexen Konstante $C_D$ gemäß Gleichung (15) und (16).

$$c_{ID} = Re\{C_D\} \qquad (15)$$

$$c_{QD} = Im\{C_D\} \qquad (16)$$

Für die Bestimmung der Gain-Imbalance sind die absoluten Verstärkungsfaktoren $a_{ID}$ und $a_{QD}$ des Inphase- bzw. des Quadratur-Signals nicht wesentlich. Vielmehr ist einzig das Verhältnis $\frac{a_{ID}}{a_{QD}}$ erforderlich, da in realen Systemen der genaue Pegel des Hochfrequenz-Signals und des Trägersignals nicht bekannt sind. Die weiter oben getroffene Festlegung, daß die Amplituden $A_{RF}$ und $A_{LO}$ des RF-Signals und der beiden Trägersignale den Wert Eins aufweisen kann dahingehend erweitert werden, daß grundsätzlich beliebige Werte für die Amplituden $A_{RF}$ und $A_{LO}$ angenommen werden können, daß aber die jeweilige Amplitude $A_{LO}$ der beiden Trägersignale einen identischen Wert aufweisen muß, um eine zusätzliche Verzerrung im Amplitudenverhältnis $a_{ID}/a_{QD}$ zwischen Inphase- und Quadratur-Kanal zu vermeiden.

Zur Bestimmung des Verhältnises der Verstärkungsfaktoren $\frac{a_{ID}}{a_{QD}}$ des Inphase- bzw. Quadratursignals und des Quadraturfehlers $\Delta\varphi_D$ aus den komplexen Konstanten $A_D$ und $B_D$ werden folgende mathematische Umformungen durchgeführt:

Ausgehend von Gleichung (10) und (11) wird in Gleichung (17) die Summe $A_D+B_D{}^*$ und in Gleichung (18) die Differenz $A_D-B_D{}^*$ gebildet.

$$A_D \; + \; B_D{}^* \; = \; \frac{1}{4}\left[a_{ID} - a_{QD}\cdot e^{-j\Delta\varphi_D} + a_{ID} + a_{QD}\cdot e^{-j\Delta\varphi_D}\right]\cdot e^{-j\varphi_0} \; = \; \frac{1}{2}a_{ID}\cdot e^{-j\varphi_0} \qquad (17)$$

$$A_D \; - \; B_D{}^* \; = \; \frac{1}{4}\left[a_{ID} - a_{QD}\cdot e^{-j\Delta\varphi_D} - a_{ID} - a_{QD}\cdot e^{-j\Delta\varphi_D}\right]\cdot e^{-j\varphi_0} = -\frac{1}{2}a_{QD}\cdot e^{-j(\Delta\varphi_D + \varphi_0)} \qquad (18)$$

Damit ergibt sich bei reellen Verstärkungsfaktoren $a_{ID}$ und $a_{QD}$ für den Betrag der Summe $A_D+B_D{}^*$ die mathematische Beziehung in Gleichung (19) und für den Betrag der Differenz $A_D-B_D{}^*$ die mathematische Beziehung in Gleichung (20).

$$\left| A_D \; + \; B_D{}^* \right| \; = \; \frac{1}{2}a_{ID} \qquad (19)$$

$$\left| A_D \; - \; B_D{}^* \right| \; = \; \frac{1}{2}a_{QD} \qquad (20)$$

Die Argumente der Summe $A_D+B_D{}^*$ und der Differenz $A_D-B_D{}^*$ ergeben sich gemäß Gleichung (21) und (22).

$$\mathrm{Arg}(A_D+B_D{}^*) \; = \; -\varphi_0 \qquad (21)$$

$$\mathrm{Arg}(A_D-B_D{}^*) \; = \; -\Delta\varphi_D-\varphi_0-\pi \qquad (22)$$

Somit wird das Verhältnis der Verstärkungsfaktoren $\frac{a_{ID}}{a_{QD}}$ des Inphase- bzw. Quadratursignals gemäß Gleichung (23) als Quotient der beiden Beträge der Summe $A_D+B_D{}^*$ und der Differenz $A_D-B_D{}^*$ aus Gleichung (19) und (20) gebildet.

$$\frac{a_{ID}}{a_{QD}} \; = \; \frac{\left| A_D + B_D{}^* \right|}{\left| A_D - B_D{}^* \right|} \qquad (23)$$

Der Quadraturfehler $\Delta\varphi_D$ ist gemäß Gleichung (24) das Argument des Quotienten der Summe $A_D+B_D{}^*$ und der Differenz $B_D{}^*-A_D$.

$$\Delta\varphi_D \;=\; \mathrm{Arg}\left(\frac{A_D + B_D{}^*}{B_D{}^* - A_D}\right) \;=\; \mathrm{Arg}\left((A_D + B_D{}^{\cdot})\cdot(B_D - A_D{}^{\cdot})\right) \tag{24}$$

Die für die Bestimmung des Quadraturfehlers $\Delta\varphi_D$, der Gain Inbalance $\frac{a_{ID}}{a_{QD}}$ und der Gleichspannungs-Offsetfehler des Inphase- und Quadratur-Signals $c_{ID}$ und $c_{QD}$ erforderlichen komplexen Konstanten $A_D$, $B_D$ und $C_D$ werden im folgenden anhand des Maximum-Likelihood-Verfahrens (ML-Verfahren) hergeleitet.

Das Maximum-Likelihood-Verfahren dient der Identifizierung von Systemparametern in dynamischen Systemen mit bekannter Struktur. Beim Maximum-Likelihood-Verfahren wird eine Optimierungsfunktion - die Likelihood-Funktion - als quadratische Betragsdifferenz zwischen einem verrauschten und somit stochastischen Meßsignal und einem auf der Systemstruktur und dessen zu schätzenden Systemparametern basierenden und zum Meßsignal korrespondieren Modellsignal über den gesamten Beobachtungszeitraum des Meßsignal gebildet. Gemäß der Wahrscheinlichkeitstheorie ist die Likelihood-Funktion genau dann minimal, wenn das berechnete Modellsignal das verrauschte Meßsignal über den gesamten Beobachtungszeitraum am besten approximiert und somit die dadurch ermittelten Systemparameter den realen Systemparamtern des dynamischen System am nächsten kommen.

Zur Bestimmung der komplexen Konstanten $A_D$, $B_D$ und $C_D$ wird gemäß Gleichung (25) die Likelihood-Funktion M als quadratischer Betrag der Signaldifferenz zwischen einem über dem Beobachtungszeitraum T gemessenen verrauschten Signal m(t) und dem dazu korrespondierenden rauschfreien Ausgangssignal x(t) des komplexen Basisbandmodells 1 des Demodulators über den Beobachtungszeitraum T gebildet.

$$M \;=\; \int_0^T |m(t) - x(t)|^2 \, dt \tag{25}$$

Die Minimierung der Likelihood-Funktion M entspricht einer Minimierung des mittleren Fehlerquadrats (MMS = Minimum Mean Square) zwischen dem rauschbehafteten Meßsignal m(t) und dem dazu korrespondierenden rauschfreien Modellsignal x (t) .

Analog zum Ausgangsignal x(t) des komplexen Basisbandmodells 1 des Demodulators wird das verrauschte Meßsignal m(t) im Maximum-Likelihood-Modellansatz gemäß Gleichung (26) in eine reelle und imaginäre Komponente zerlegt. Der reelle Rauschanteil des verrauschten Signals m(t), der im Sinne der Maximum-Likelihood-Theorie als weißes Rauschen vorausgesetzt wird, ist in der Realität nur näherungsweise weiß, was aber für die weitere Betrachtung vernachlässigbar ist.

$$m(t) \;=\; m_I(t) \;+\; m_Q(t) \tag{26}$$

Die Minimierung der Likelihood-Funktion M im Sinne der Bestimmung der reellen und imaginären Komponenten der komplexen Konstanten $A_D$, $B_D$ und $C_D$ erfolgt durch partielle Differentiation der Likelihood-Funktion M nach den reellen Komponenten $A_{ID}$, $A_{QD}$, $B_{ID}$, $B_{QD}$, $C_{ID}$ und $C_{QD}$ und anschließender Nullsetzung der partiellen Ableitungen.

Die Likelihood-Funktion M wird im Hinblick auf ihre Minimierung im folgenden mathematisch umgeformt. Hierzu wird der quadratische Betrag der Signaldifferenz $|m(t)-x(t)|^2$ gemäß Gleichung (27) übergeführt in eine Multiplikation der Signaldifferenz mit der konjugiert Komplexen der Signaldifferenz.

$$|m(t)-x(t)|^2 = (m(t)-x(t))\cdot(m(t)-x(t))^{\cdot} =$$
$$= |m(t)|^2 + |x(t)|^2 - 2\cdot\mathrm{Re}\{m(t)*x^{\cdot}(t)\} \tag{27}$$

Unter Einbeziehung von Gleichung (13) ergibt sich für den quadratischen Betrag des rauschfreien Ausgangssignals $|x(t)|^2$ die mathematische Beziehung in Gleichung (28).

$$2 \cdot Re\{A_D * C_D^* \cdot e^{j\omega_b t} + B_D \cdot C_D^* \cdot e^{-j\omega_b t}\}$$

$$= |A_D \cdot e^{j\omega_b t}|^2 + |B_D \cdot e^{-j\omega_b t}|^2 + 2 \cdot Re\{A_D \cdot e^{j\omega_b t} \cdot B_D^* \cdot e^{j\omega_b t}\} +$$

$$|C_D|^2 + 2 \cdot Re\{A_D \cdot C_D^* \cdot e^{j\omega_b t} + B_D \cdot C_D^* \cdot e^{-j\omega_b t}\}$$

$$= |A_D|^2 + |B_D|^2 + |C_D|^2 +$$

$$2 \cdot Re\{A_D \cdot B_D^* \cdot e^{j2\omega_b t} + A_D \cdot C_D^* \cdot e^{j\omega_b t} + B_D \cdot C_D^* \cdot e^{-j\omega_b t}\}$$

$$(28)$$

Einsetzen der reellen und imaginären Komponenten der komplexen Konstanten $A_D$, $B_D$ und $C_D$ gemäß Gleichung (10), (11) und (12) in Gleichung (28) liefert Gleichung (29) für den quadratischen Betrag des Ausgangssignals $|x(t)|^2$.

$$|x(t)|^2 = A_{ID}^2 + A_{QD}^2 + B_{ID}^2 + B_{QD}^2 + C_{ID}^2 + C_{QD}^2 +$$

$$2 \cdot Re\{(A_{ID}+jA_{QD}) \cdot (B_{ID}-jB_{QD}) \cdot e^{j2\omega_b t}\} +$$

$$2 \cdot Re\{(A_{ID}+jA_{QD}) \cdot (c_{ID}-jc_{QD}) \cdot e^{j\omega_b t}\} +$$

$$2 \cdot Re\{(B_{ID}+jB_{QD}) \cdot (c_{ID}-jc_{QD}) \cdot e^{-j\omega_b t}\} \qquad (29)$$

Für den Term $-2 \cdot Re\{m(t) \cdot x^*(t)\}$ ergibt sich die mathematische Beziehung von Gleichung (30) bei Berücksichtigung von Gleichung (13).

$$-2 \cdot Re\{m(t) \cdot x^*(t)\} = -2 \cdot Re\{m(t) \cdot (A_D \cdot e^{j\omega_b t} + B_D \cdot e^{-j\omega_b t} + C_D)^*\}$$

$$= -2 \cdot Re\{m(t) \cdot (A_{ID}-jA_{QD}) \cdot e^{-j\omega_b t}\}$$

$$-2 \cdot Re\{m(t) \cdot (B_{ID}-jB_{QD}) \cdot e^{j\omega_b t}\}$$

$$-2 \cdot Re\{m(t) \cdot (c_{ID}-jc_{QD})\} \qquad (30)$$

Für den quadratischen Betrag der Signaldifferenz $|m(t)-x(t)|^2$ egibt sich somit ausgehend von Gleichung (27) unter Berücksichtigung von Gleichung (29) und (30) die mathematische Beziehung in Gleichung (31).

$$|m(t)-x(t)|^2 = |m(t)|^2 + |x(t)|^2 -2 \cdot Re\{m(t) \cdot x^*(t)\}$$

$$= m_I^2(t) + m_Q^2(t) + A_{ID}^2 + A_{QD}^2 + B_{ID}^2 + B_{QD}^2$$

$$+ c_{ID}^2 + c_{QD}^2$$

$$+ 2 \cdot Re\{(A_{ID}+jA_{QD}) \cdot (B_{ID}-jB_{QD}) \cdot e^{j2\omega_b t}\}$$

$$+ 2 \cdot Re\{(A_{ID}+jA_{QD}) \cdot (c_{ID}-jc_{QD}) \cdot e^{j\omega_b t}\}$$

$$+ 2 \cdot Re\{(B_{ID}+jB_{QD}) \cdot (c_{ID}-jc_{QD}) \cdot e^{-j\omega_b t}\}$$

$$-2 \cdot Re\{m(t) \cdot (A_{ID}-jA_{QD}) \cdot e^{-j\omega_b t}\}$$

$$-2 \cdot Re\{m(t) \cdot (B_{ID}-jB_{QD}) \cdot e^{j\omega_b t}\}$$

Die Minimierung der Likelihood-Funktion M erfolgt durch partielle Differentiation des quadratischen Betrags der Signaldifferenz $|m(t)-x(t)|^2$ jeweils nach den einzelnen Komponenten $A_{ID}$, $A_{QD}$, $B_{ID}$, $B_{QD}$, $c_{ID}$ und $c_{QD}$ der gesuchten komplexen Konstanten $A_D$, $B_D$ und $C_D$, Integration über den Beobachtungszeitraum T und Nullsetzung des Integrationsergebnisses.

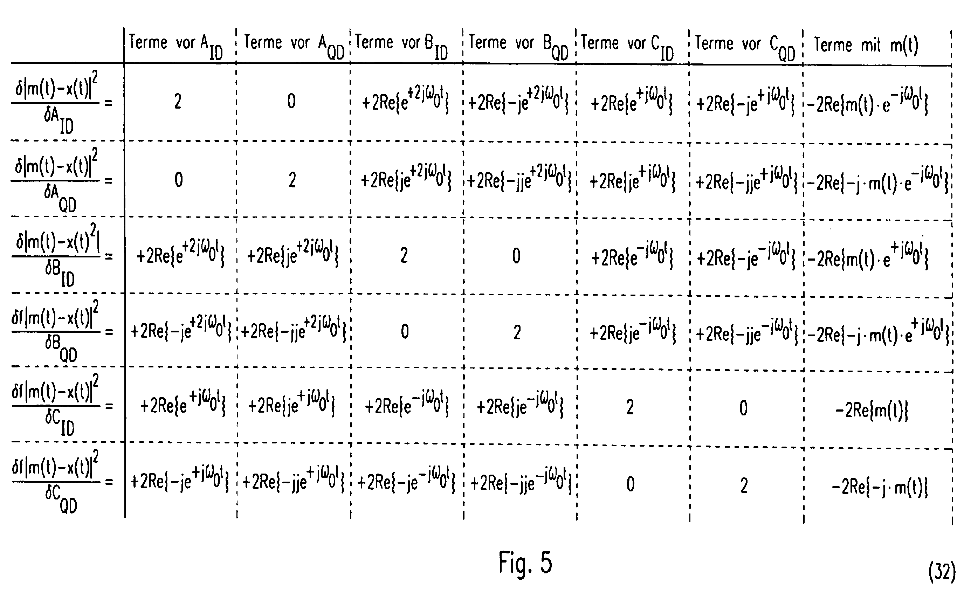

Die partielle Differentiation des quadratischen Betrags der Signaldifferenz $|m(t) - x(t)|^2$ ausgehend von Gleichung (31) nach den einzelnen reellen Variablen $A_{ID}$, $A_{QD}$, $B_{ID}$, $B_{QD}$, $C_{ID}$ und $C_{QD}$ führt zu den im in Fig. 5 gezeigten Gleichungssystem (32) nach den einzelnen reellen Variablen $A_{ID}$, $A_{QD}$, $B_{ID}$, $B_{QD}$, $c_{ID}$ und $c_{QD}$ sowie der Funktion m(t) geordneten Termen.

Nach weiterer mathematischer Vereinfachung des Gleichungssystems (30) erhält man das Gleichungssystem (33).

$$\frac{1}{2} \cdot \begin{pmatrix} \dfrac{\partial |m(t)-x(t)|^2}{\partial A_{ID}} \\[2mm] \dfrac{\partial |m(t)-x(t)|^2}{\partial A_{QD}} \\[2mm] \dfrac{\partial |m(t)-x(t)|^2}{\partial B_{ID}} \\[2mm] \dfrac{\partial |m(t)-x(t)|^2}{\partial B_{QD}} \\[2mm] \dfrac{\partial |m(t)-x(t)|^2}{\partial c_{ID}} \\[2mm] \dfrac{\partial |m(t)-x(t)|^2}{\partial c_{QD}} \end{pmatrix} =$$

$$\underbrace{\begin{pmatrix} 1 & 0 & +\mathrm{Re}\{e^{-2\mu\nu}\} & +\mathrm{Im}\{e^{-2\mu\nu}\} & +\mathrm{Re}\{e^{-\mu\nu}\} & +\mathrm{Im}\{e^{-\mu\nu}\} \\ 0 & 1 & -\mathrm{Im}\{e^{-2\mu\nu}\} & +\mathrm{Re}\{e^{-2\mu\nu}\} & -\mathrm{Im}\{e^{-\mu\nu}\} & +\mathrm{Re}\{e^{-\mu\nu}\} \\ +\mathrm{Re}\{e^{-2\mu\nu}\} & -\mathrm{Im}\{e^{-2\mu\nu}\} & 1 & 0 & +\mathrm{Re}\{e^{-\mu\nu}\} & +\mathrm{Im}\{e^{-\mu\nu}\} \\ +\mathrm{Im}\{e^{-2\mu\nu}\} & +\mathrm{Re}\{e^{-2\mu\nu}\} & 0 & 1 & -\mathrm{Im}\{e^{-\mu\nu}\} & +\mathrm{Re}\{e^{-\mu\nu}\} \\ +\mathrm{Re}\{e^{-\mu\nu}\} & -\mathrm{Im}\{e^{-\mu\nu}\} & +\mathrm{Re}\{e^{-\mu\nu}\} & -\mathrm{Im}\{e^{-\mu\nu}\} & 1 & 0 \\ +\mathrm{Im}\{e^{-\mu\nu}\} & +\mathrm{Re}\{e^{-\mu\nu}\} & +\mathrm{Im}\{e^{-\mu\nu}\} & +\mathrm{Re}\{e^{-\mu\nu}\} & 0 & 1 \end{pmatrix}}_{\underline{A}} \cdot \underbrace{\begin{pmatrix} A_{ID} \\ A_{QD} \\ B_{ID} \\ B_{QD} \\ c_{ID} \\ c_{QD} \end{pmatrix}}_{\underline{x}} = \underbrace{\begin{pmatrix} \mathrm{Re}\{m(t)\cdot e^{-\mu\nu}\} \\ \mathrm{Im}\{m(t)\cdot e^{-\mu\nu}\} \\ \mathrm{Re}\{m(t)\cdot e^{-\mu\nu}\} \\ \mathrm{Im}\{m(t)\cdot e^{-\mu\nu}\} \\ \mathrm{Re}\{m(t)\} \\ \mathrm{Im}\{m(t)\} \end{pmatrix}}_{\underline{b}}$$

$$(33)$$

Im folgenden werden die einzelnen komponenten $A_{ID}$, $A_{QD}$, $B_{ID}$, $B_{QD}$, $c_{ID}$ und $c_{QD}$ der gesuchten komplexen Konstanten $A_D$, $B_D$ und $C_D$ gemäß Gleichung (34) in einem Lösungsvektor x zusammengefaßt.

$$\underline{x} = \begin{bmatrix} A_{ID} \\ A_{QD} \\ B_{ID} \\ B_{QD} \\ c_{ID} \\ c_{QD} \end{bmatrix} \qquad (34)$$

Die einzelnen partiellen Differentiationen des quadratischen Betrags der Signaldifferenz $|m(t)-x(t)|^2$ nach den einzelnen Komponenten $A_{ID}$, $A_{QD}$, $B_{ID}$, $B_{QD}$, $c_{ID}$ und $c_{QD}$ der gesuchten komplexen Konstanten $A_D$, $B_D$ und $C_D$ werden gemäß Gleichung (35) in einem Vektor zusammengefaßt, der dem Nabla-Operator des quadratischen Betrags der Signaldifferenz $\nabla_{\underline{x}} |m(t)-x(t)|^2$ entspricht.

$$\nabla_{\underline{x}}|m(t)-x(t)|^2 = \begin{bmatrix} \dfrac{\partial|m(t)-x(t)|^2}{\partial A_{ID}} \\[2ex] \dfrac{\partial|m(t)-x(t)|^2}{\partial A_{QD}} \\[2ex] \dfrac{\partial|m(t)-x(t)|^2}{\partial B_{ID}} \\[2ex] \dfrac{\partial|m(t)-x(t)|^2}{\partial B_{QD}} \\[2ex] \dfrac{\partial|m(t)-x(t)|^2}{\partial c_{ID}} \\[2ex] \dfrac{\partial|m(t)-x(t)|^2}{\partial c_{QD}} \end{bmatrix} \qquad (35)$$

Die Terme, die jeweils mit den Komponenten des Lösungsvektors $\underline{x}$ multipliziert werden, werden gemäß Gleichung (36) in einer Matrix $\overline{A}$ zusammengefaßt, während die Terme mit dem rauschbehafteten Meßsignal m(t) gemäß Gleichung (37) in einem Vektor $\underline{b}$ zusammengefaßt werden. Zusätzlich werden noch die Zeitabhängigkeit der Elemente hervorgehoben (z.B. $\underline{b} \rightarrow \underline{b}(t)$).

$$\overline{A} = \begin{bmatrix} 1 & 0 & +\text{Re}\{e^{+2j\omega_0 t}\} & +\text{Im}\{e^{+2j\omega_0 t}\} & +\text{Re}\{e^{+j\omega_0 t}\} & +\text{Im}\{e^{+j\omega_0 t}\} \\ 0 & 1 & -\text{Im}\{e^{+2j\omega_0 t}\} & +\text{Re}\{e^{+2j\omega_0 t}\} & -\text{Im}\{e^{+j\omega_0 t}\} & +\text{Re}\{e^{+j\omega_0 t}\} \\ +\text{Re}\{e^{+2j\omega_0 t}\} & -\text{Im}\{e^{+2j\omega_0 t}\} & 1 & 0 & +\text{Re}\{e^{-j\omega_0 t}\} & +\text{Im}\{e^{-j\omega_0 t}\} \\ +\text{Im}\{e^{+2j\omega_0 t}\} & +\text{Re}\{e^{+2j\omega_0 t}\} & 0 & 1 & -\text{Im}\{e^{-j\omega_0 t}\} & +\text{Re}\{e^{-j\omega_0 t}\} \\ +\text{Re}\{e^{+j\omega_0 t}\} & -\text{Im}\{e^{+j\omega_0 t}\} & +\text{Re}\{e^{-j\omega_0 t}\} & -\text{Im}\{e^{-j\omega_0 t}\} & 1 & 0 \\ +\text{Im}\{e^{+j\omega_0 t}\} & +\text{Re}\{e^{+j\omega_0 t}\} & +\text{Im}\{e^{-j\omega_0 t}\} & +\text{Re}\{e^{-j\omega_0 t}\} & 0 & 1 \end{bmatrix}$$
$$(36)$$

$$\underline{b} = \begin{bmatrix} \text{Re}\{m(t)\cdot e^{-j\omega_0 t}\} \\ \text{Im}\{m(t)\cdot e^{-j\omega_0 t}\} \\ \text{Re}\{m(t)\cdot e^{+j\omega_0 t}\} \\ \text{Im}\{m(t)\cdot e^{+j\omega_0 t}\} \\ \text{Re}\{m(t)\} \\ \text{Im}\{m(t)\} \end{bmatrix} \qquad (37)$$

Somit kann das Gleichungssystem (33) durch die Schreibweise von Gleichung (38) zusammengefaßt werden.

$$\frac{1}{2}\nabla_{\underline{\mathbf{x}}}|m(t) - x(t)|^2 = \overline{\mathbf{A}}(t)\cdot\underline{\mathbf{x}} - \underline{\mathbf{b}}(t) \tag{38}$$

Schließend wird entsprechend dem Maximum-Likelihood-Verfahren das Differentiationsergebnis gemäß Gleichung (39) über den Beobachtungszeitraum T integriert.

$$\frac{1}{2}\int_0^T \nabla_{\underline{\mathbf{x}}}|m(t) - x(t)|^2\,dt = \int_0^T \overline{\mathbf{A}}(t)\cdot\underline{\mathbf{x}} - \underline{\mathbf{b}}(t)\,dt \tag{39}$$

Abschließend erfolgt gemäß Gleichung (40) im Hinblick auf die Minimumssuche der Likelihood-Funktion M die Nullsetzung des Integrationsergebnisses von Gleichung (39).

$$\int_0^T \overline{\mathbf{A}}(t)\cdot\underline{\mathbf{x}} - \underline{\mathbf{b}}(t)\,dt \overset{!}{=} \mathbf{0} \tag{40}$$

Aus Gleichung (40) ergibt sich das lineare Gleichungssystem (41) zur Ermittlung des gesuchten Lösungsvektors $\underline{x}$.

$$\int_0^T \overline{\mathbf{A}}(t)\,dt\cdot\underline{\mathbf{x}} = \int_0^T \underline{\mathbf{b}}(t)\,dt \tag{41}$$

Dieses Gleichungssystem (41) kann mit Standardverfahren (z.B. nach Cholesky) numerisch gelöst werden, wobei die Integration so zu verstehen ist, dass alle Matrix- bzw. Vektorelemente gemäß Gleichung (42) zu integrieren sind. Als Lösung erhält man den gesuchten Lösungsvektor x. Der Übersichtlichkeit halber sind bei den Integralen die Integrationsgrenzen weggelassen worden (anstelle von $\int_0^T \cdots dt$ steht $\int ..dt$

$$
\begin{pmatrix}
\int dt & 0 & +\mathrm{Re}\int e^{+2j\omega_0 t}dt & +\mathrm{Im}\int e^{+2j\omega_0 t}dt & +\mathrm{Re}\int e^{+j\omega_0 t}dt & +\mathrm{Im}\int e^{+j\omega_0 t}dt \\
0 & \int dt & -\mathrm{Im}\int e^{+2j\omega_0 t}dt & +\mathrm{Re}\int e^{+2j\omega_0 t}dt & -\mathrm{Im}\int e^{+j\omega_0 t}dt & +\mathrm{Re}\int e^{+j\omega_0 t}dt \\
+\mathrm{Re}\int e^{+2j\omega_0 t}dt & -\mathrm{Im}\int e^{+2j\omega_0 t}dt & \int dt & 0 & +\mathrm{Re}\int e^{-j\omega_0 t}dt & +\mathrm{Im}\int e^{-j\omega_0 t}dt \\
+\mathrm{Im}\int e^{+2j\omega_0 t}dt & +\mathrm{Re}\int e^{+2j\omega_0 t}dt & 0 & \int dt & -\mathrm{Im}\int e^{-j\omega_0 t}dt & +\mathrm{Re}\int e^{-j\omega_0 t}dt \\
+\mathrm{Re}\int e^{+j\omega_0 t}dt & -\mathrm{Im}\int e^{+j\omega_0 t}dt & +\mathrm{Re}\int e^{-j\omega_0 t}dt & -\mathrm{Im}\int e^{-j\omega_0 t}dt & \int dt & 0 \\
+\mathrm{Im}\int e^{+j\omega_0 t}dt & +\mathrm{Re}\int e^{+j\omega_0 t}dt & +\mathrm{Im}\int e^{-j\omega_0 t}dt & +\mathrm{Re}\int e^{-j\omega_0 t}dt & 0 & \int dt
\end{pmatrix}
\begin{pmatrix}
A_{n'} \\ A_{c,n'} \\ B_{n'} \\ B_{c,n'} \\ c_{n'} \\ c_{c,n'}
\end{pmatrix}
=
$$

$$
=
\begin{pmatrix}
\int \mathrm{Re}\left\{m(t)\cdot e^{-j\omega_0 t}\right\}dt \\
\int \mathrm{Im}\left\{m(t)\cdot e^{-j\omega_0 t}\right\}dt \\
\int \mathrm{Re}\left\{m(t)\cdot e^{+j\omega_0 t}\right\}dt \\
\int \mathrm{Im}\left\{m(t)\cdot e^{+j\omega_0 t}\right\}dt \\
\int \mathrm{Re}\left\{m(t)\right\}dt \\
\int \mathrm{Im}\left\{m(t)\right\}dt
\end{pmatrix}
$$

$$(42)$$

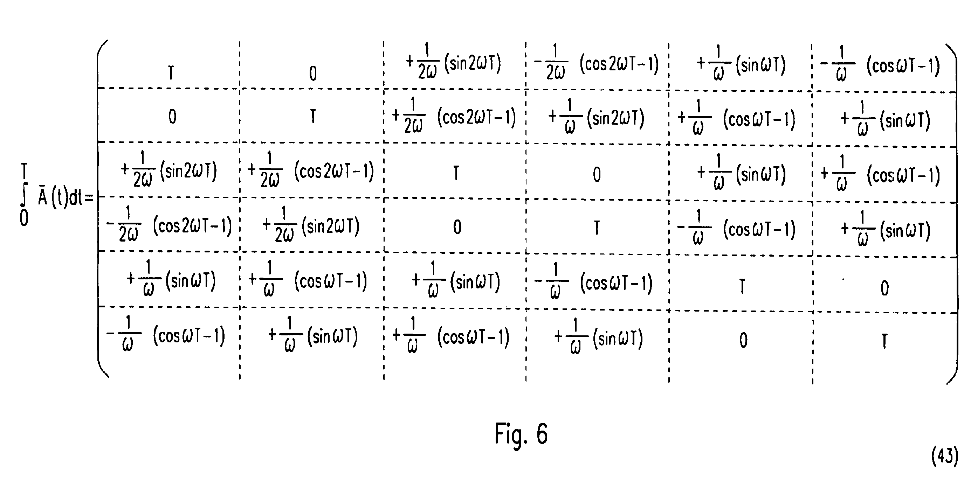

Bei bekannter Kreisfrequenz $\omega_0$ als subtraktives Mischprodukt der Kreisfrequenzen $\omega_{RF}$ und $\omega_{LO}$ gemäß Gleichung (3) läßt sich die linke Seite des Gleichungssystems (42) gemäß der in Fig. 6 gezeigten Gleichung (43) analytisch lösen. Ist die Kreisfrequenz $\omega_0$ nicht bekannt, so muß sie geschätzt werden.

Falls der Beobachtungszeitraum T entsprechend der mathematischen Beziehung in Gleichung (44) gewählt wird, vereinfacht sich die Matrix $\int_0^T \overline{\mathbf{A}}(t)dt$ gemäß Gleichung (45) zu einer Diagonalmatrix, deren Diagonalelemente jeweils den Wert $n\cdot\dfrac{2\pi}{\omega_0}$ aufweisen, wobei n eine ganze, positive Zahl ist.

$$T = n\cdot\frac{2\pi}{\omega_0} \qquad\qquad (44)$$

$$
\int_0^T \overline{\mathbf{A}}(t)dt = n\cdot\frac{2\pi}{\omega_0}
\begin{pmatrix}
1 & 0 & 0 & 0 & 0 & 0 \\
0 & 1 & 0 & 0 & 0 & 0 \\
0 & 0 & 1 & 0 & 0 & 0 \\
0 & 0 & 0 & 1 & 0 & 0 \\
0 & 0 & 0 & 0 & 1 & 0 \\
0 & 0 & 0 & 0 & 0 & 1
\end{pmatrix}
\qquad\qquad (45)
$$

Damit ergibt sich für den Lösungsvektor x ausgehend von Gleichung (41) die mathematische Beziehung in Gleichung (46).

$$\underline{x} = \cdot \frac{1}{n} \cdot \frac{\omega_0}{2\pi} \int_0^T \underline{b}(t)\, dt \qquad\qquad (46)$$

Die Berechnung des Lösungsvektors entspricht somit einer Fourier-Transformation des verrauschten Meßsignals m(t) an den Kreisfrequenzen $-\omega_0$, 0 und $+\omega_0$.

Die bisherige Herleitung der mathematischen Beziehungen zur Bestimmung des Lösungsvektors $\underline{x}$ mittels Maximum-Likelihood-Verfahren und darauf aufbauend die Bestimung der Signalfehler $\Delta\varphi_D$, $\frac{a_{ID}}{a_{QD}}$, $c_{ID}$ und $c_{QD}$ im komplexen Basisbandmodell 1 des Demodulators basieren auf einer analogen Signalverarbeitung des rauschbehafteten Meßsignals m(t). In der Praxis wird das analog erfaßte rauschbehaftete Meßsignal m(t) einer Analog-Digital-Wandlung zugeführt und digital weiterverarbeitet. Hierzu sind die einzelnen Integrationen in Gleichung (42) anstelle einer analogen Integration mittels eines numerischen Integrationsverfahrens (Summation) durchzuführen.

Aufbauend auf den bisher hergeleiteten mathematischen Beziehungen wird im folgenden das in Fig. 2 dargestellte erfindungsgemäße Verfahren zur Ermittlung von Signalfehlern in Demodulatoren beschrieben.

In Verfahrensschritt S10 wird am Hochfrequenz-Eingang 2 des Demodulators 1 ein Hochfrequenz-Signal $x_{RF}$(t)=cos($\omega_{RF}$t) mit einer normierten Amplitude $A_{RF}$ von Eins und einer hochfrequenten Kreisfrequenz $\omega_{RF}$ angelegt.

Analog wird im nächsten Verfahrensschritt S20 an die erste und zweite Mischerstufe 3 und 4 des Demodulators 1 jeweils ein Trägersignal $x_{LO}$(t) mit einer normierten Amplitude $A_{LO}$ von 1 und einer Trägerkreisfrequenz $\omega_{LO}$ angelegt, die in ihrer Phase zueinander in Quadratur stehen.

Der nächste Verfahrensschritt S30 beinhaltet das Messen des rauschbehafteten Ausgangsgangssignals m(t) am Basisband-Ausgang 13 des Demodulators 1 über den Beobachtungszeitraum T.

Auf der Basis des gemessenen rauschbehafteten Hochfrequenz-Ausgangssignals $m_{RF}$(t) und der bekannten Kreisfrequenz $\omega_0$ als subtraktives Mischprodukt der Trägerkreisfrequenz $\omega_{LO}$ und der Kreisfrequenz $\omega_{NF}$ des Inphase- bzw. Quadratur-Signals werden die einzelnen Koeffizienten der Systemmatrix $\overline{A}$ und des Vektors $\underline{b}$ der "rechten Gleichungsseite" des linearen Gleichungssystems (40) mittels numerischer Integration im Verfahrensschritt S40 ermittelt.

Das in Verfahrensschritt S40 ermittelte lineare Gleichungssystem wird im darauffolgenden Verfahrensschritt S50 mit einem numerischen Verfahren zur Ermittlung des Lösungsvektors x gelöst.

Schließlich werden im abschließenden Verfahrensschritt S60 die Signalfehler $\Delta\varphi_D$, $\frac{a_{ID}}{a_{QD}}$, $c_{ID}$ und $c_{QD}$ des Demodulators 1 aus den einzelnen Komponenten $A_{ID}$, $A_{QD}$, $B_{ID}$, $B_{QD}$, $c_{ID}$ und $c_{QD}$ des Lösungsvektors x unter Anwendung der mathematischen Beziehungen in Gleichung (15), (16), (23) und (24) berechnet.

Im folgenden werden die mathematischen Grundlagen des komplexen Basisbandmodells 100 des Modulators in Fig. 3 hergeleitet.

Das komplexe Basisbandmodell 100 des Modulators in Fig. 3 wird an seinem Inphase-Eingang 101 mit einem Inphase-Signal cos($\omega_{NF}$·t) mit einer normierten Amplitude $A_{NF}$ von Eins und einer Kreisfrequenz $\omega_{NF}$ angeregt. Das Inphase-Signal cos($\omega_{NF}$·t) wird in einem dritten Verstärker 102 mit einem positiven, reellwertigen Vertärkungsfaktor $a_{IM}$ verstärkt und in einem dritten Summierglied 103 mit einem Gleichspannungs-Offset $c_{IM}$ überlagert. Das Inphase-Signal $i_{10}$(t) am Ausgang des dritten Summierglied 103 ergibt sich gemäß Gleichung (47):

$$i_{10}(t) = a_{IM}\cos\left(\omega_{NF}\cdot t\right) + c_{IM}$$
$$= \frac{1}{2} a_{IM}\left(e^{j\omega_{NF}t} + e^{-j\omega_{NF}t}\right) + c_{IM} \qquad\qquad (47)$$

Das Inphase-Signal $i_{10}$(t) wird in einer dritten Mischerstufe 104 mit einem dritten Trägersignal cos($\omega_{LO}$·t+$\varphi_0$+$\Delta\varphi_M$) mit einer normierten Amplitude $A_{LO}$ von Eins, einer Trägerkreisfrequenz $\omega_{LO}$ und einer Anfangsphase $\varphi_0$ zuzüglich einem Quadraturfehler $\Delta\varphi_M$ in den Hochfrequenzbereich hochgemischt. Die Anfangsphase $\varphi_0$ gibt den unbestimmten Phasenzustand des dritten Trägersignals cos($\omega_{LO}$·t+$\varphi_0$+$\Delta\varphi_M$) zum Zeitpunbkt t=0 an. Der Quadraturfehler $\Delta\varphi_M$ gibt eine zusätzliche Phasenabweichung des Inphase-Signals $i_{10}$(t) zum in Quadratur stehenden Quadratur-Signal $q_{10}$(t) an. Das Inphase-Signal cos($\omega_{NF}$·t) könnte analog eine Anfangsphase $\varphi_0$ aufweisen. Da die Anfangsphase $\varphi_0$ von Inphase-Signal und dritten Trägersignal nicht gleichzeitig bestimmt werden kann, wird die Anfangsphase $\varphi_0$ des Inphase-

Signals ohne Beschränkung der Allgemeinheit zu Null angenommen. Das Inphase-Signal $i_{20}$(t) am Ausgang der dritten Mischerstufe 101 ergibt sich gemäß Gleichung (48):

$$
\begin{aligned}
i_{20}(t) &= \left(a_{IM}\cos\left(\omega_{NF}t\right) + c_{IM}\right)\cdot\cos\left(\omega_{LO}t + \varphi_0 + \Delta\varphi_M\right) \\
&= \frac{1}{2}a_{IM}\left(e^{j\omega_{NF}t} + e^{-j\omega_{NF}t}\right)\cdot\frac{1}{2}\left(e^{+j(\omega_{LO}t+\varphi_0+\Delta\varphi_M)} + e^{-j(\omega_{LO}t+\varphi_0+\Delta\varphi_M)}\right) + \\
&\quad + \frac{1}{2}c_{IM}\left(e^{+j(\omega_{LO}t+\varphi_0+\Delta\varphi_M)} + e^{-j(\omega_{LO}t+\varphi_0+\Delta\varphi_M)}\right) \\
&= \frac{1}{4}a_{IM}\left[\begin{array}{l} e^{+j((\omega_{LO}+\omega_{NF})t+\varphi_0+\Delta\varphi_M)} + e^{-j((\omega_{LO}-\omega_{NF})t+\varphi_0+\Delta\varphi_M)} + \\ e^{+j((\omega_{LO}-\omega_{NF})t+\varphi_0+\Delta\varphi_M)} + e^{-j((\omega_{LO}+\omega_{NF})t+\varphi_0+\Delta\varphi_M)} \end{array}\right] + \\
&\quad + \frac{1}{2}c_{IM}\left(e^{+j(\omega_{LO}t+\varphi_0+\Delta\varphi_M)} + e^{-j(\omega_{LO}t+\varphi_0+\Delta\varphi_M)}\right)
\end{aligned}
$$

$$(48)$$

An seinem Quadratur-Eingang 105 wird das komplexe Basisdatenmodell 100 des Modulators mit dem Quadratur-Signal sin($\omega_{NF}\cdot$t) in einer vierten Verstärker 106 mit einem positiven, reellwertigen Verstärkungsfaktor $a_{QM}$ verstärkt und in einem nachfolgenden vierten Summierglied 107 mit einem Gleichspannungs-Offset $c_{QM}$ überlagert. Das Quadratur-Signal $q_{10}$(t) am Ausgang des vierten Summiergliedes 107 ergibt sich gemäß Gleichung (49):

$$
\begin{aligned}
q_{10}(t) &= a_{QM}\sin\left(\omega_{NF}t\right) + c_{QM} \\
&= \frac{1}{2j}a_{QM}\left(e^{j\omega_{NF}t} - e^{-j\omega_{NF}t}\right) + c_{QM}
\end{aligned}
$$

$$(49)$$

Das Quadratur-Signal $q_{10}$(t) am Ausgang des vierten Summiergliedes 107 wird in einer vierten Mischerstufe 108 mit einem zum dritten Trägersignal der dritten Mischerstufe 104 in Quadratur stehenden vierten Trägersignal -sin($\omega_{LO}\cdot$t+$\varphi_0$) in den Hochfrequenzbereich hochgemischt. Das Quadratur-Signal $q_{10}$(t) am Ausgang der vierten Mischerstufe 104 ergibt sich gemäß Gleichung (50):

$$
\begin{aligned}
q_{20}(t) &= \left(a_{QM}\sin\left(\omega_{NF}t\right) + c_{QM}\right)\cdot\left(-\sin\left(\omega_{LO}t + \varphi_0\right)\right) \\
&= -\frac{1}{2j}a_{QM}\left(e^{j\omega_{NF}t} - e^{-j\omega_{NF}t}\right)\cdot\frac{1}{2j}\left(e^{j(\omega_{LO}t+\varphi_0)} - e^{-j(\omega_{LO}t+\varphi_0)}\right) + \\
&\quad - \frac{1}{2j}c_{QM}\left(e^{j(\omega_{LO}t+\varphi_0)} - e^{-j(\omega_{LO}t+\varphi_0)}\right) \\
&= \frac{1}{4}a_{QM}\left[e^{j((\omega_{LO}+\omega_{NF})t+\varphi_0)} - e^{-j((\omega_{LO}-\omega_{NF})t+\varphi_0)} - e^{j((\omega_{LO}-\omega_{NF})t+\varphi_0)} + e^{-j((\omega_{LO}+\omega_{NF})t+\varphi_0)}\right] + \\
&\quad - \frac{1}{2j}c_{QM}\left(e^{j(\omega_{LO}t+\varphi_0)} - e^{-j(\omega_{LO}t+\varphi_0)}\right)
\end{aligned}
$$

$$(50)$$

Die beiden Signale $i_{20}$(t) und $q_{20}$(t) werden anschließend in einem Addierer 109 zu einem RF-Signal $x_{RF}$(t) am Ausgang 110 des komplexen Basisband-Modells 100 des Modulators gemäß Gleichung (51) addiert.

$$x_{RF}(t) := i_{20}(t) + q_{20}(t) \tag{51}$$

Mit den mathematischen Beziehungen der Signale $i_{20}(t)$ und $q_{20}(t)$ in Gleichung (48) und (50) geht die mathematische Beziehung für das RF-Signal $x_{RF}(t)$ in Gleichung (51) nach Gleichung (52) über:

$$
\begin{aligned}
x_{RF}(t) &= i_{20}(t) + q_{20}(t) \\
&= \frac{1}{4} a_{IM} \left[ e^{+j((\omega_{LO}+\omega_{NF})t+\varphi_0+\Delta\varphi_M)} + e^{-j((\omega_{LO}-\omega_{NF})t+\varphi_0+\Delta\varphi_M)} + \atop e^{+j((\omega_{LO}-\omega_{NF})t+\varphi_0+\Delta\varphi_M)} + e^{-j((\omega_{LO}+\omega_{NF})t+\varphi_0+\Delta\varphi_M)} \right] + \\
&\quad + \frac{1}{2} c_{IM} \left( e^{+j(\omega_{LO}t+\varphi_0+\Delta\varphi_M)} + e^{-j(\omega_{LO}t+\varphi_0+\Delta\varphi_M)} \right) + \\
&\quad + \frac{1}{4} a_{QM} \left[ e^{j((\omega_{LO}+\omega_{NF})t+\varphi_0)} - e^{-j((\omega_{LO}-\omega_{NF})t+\varphi_0)} \atop -e^{j((\omega_{LO}-\omega_{NF})t+\varphi_0)} + e^{-j((\omega_{LO}+\omega_{NF})t+\varphi_0)} \right] + \\
&\quad - \frac{1}{2j} c_{QM} \left( e^{j(\omega_{LO}t+\varphi_0)} - e^{-j(\omega_{LO}t+\varphi_0)} \right) \\
&= \frac{1}{4} \left( a_{IM} e^{+j((\omega_{LO}+\omega_{NF})t+\varphi_0+\Delta\varphi_M)} + a_{QM} e^{j((\omega_{LO}+\omega_{NF})t+\varphi_0)} \right) + \\
&\quad + \frac{1}{4} \left( a_{IM} e^{-j((\omega_{LO}-\omega_{NF})t+\varphi_0+\Delta\varphi_M)} - a_{QM} e^{-j((\omega_{LO}-\omega_{NF})t+\varphi_0)} \right) + \\
&\quad + \frac{1}{4} \left( a_{IM} e^{+j((\omega_{LO}-\omega_{NF})t+\varphi_0+\Delta\varphi_M)} - a_{QM} e^{j((\omega_{LO}-\omega_{NF})t+\varphi_0)} \right) + \\
&\quad + \frac{1}{4} \left( a_{IM} e^{-j((\omega_{LO}+\omega_{NF})t+\varphi_0+\Delta\varphi_M)} + a_{QM} e^{-j((\omega_{LO}+\omega_{NF})t+\varphi_0)} \right) + \\
&\quad + \frac{1}{2} c_{IM} \left( e^{+j(\omega_{LO}t+\varphi_0+\Delta\varphi_M)} + e^{-j(\omega_{LO}t+\varphi_0+\Delta\varphi_M)} \right) - \frac{1}{2j} c_{QM} \left( e^{j(\omega_{LO}t+\varphi_0)} - e^{-j(\omega_{LO}t+\varphi_0)} \right) \\
&= \frac{1}{4} \left( e^{j((\omega_{LO}+\omega_{NF})t+\varphi_0)} \left( a_{IM} e^{+j\Delta\varphi_M} + a_{QM} \right) \right) + \\
&\quad + \frac{1}{4} \left( e^{-j((\omega_{LO}-\omega_{NF})t+\varphi_0)} \left( a_{IM} e^{-j\Delta\varphi_M} - a_{QM} \right) \right) + \\
&\quad + \frac{1}{4} \left( e^{j((\omega_{LO}-\omega_{NF})t+\varphi_0)} \left( a_{IM} e^{j\Delta\varphi_M} - a_{QM} \right) \right) + \\
&\quad + \frac{1}{4} \left( e^{-j((\omega_{LO}+\omega_{NF})t+\varphi_0)} \left( a_{IM} e^{-j\Delta\varphi_M} + a_{QM} \right) \right) + \\
&\quad + \frac{1}{2} c_{IM} \left( e^{+j(\omega_{LO}t+\varphi_0+\Delta\varphi_M)} + e^{-j(\omega_{LO}t+\varphi_0+\Delta\varphi_M)} \right) - \frac{1}{2j} c_{QM} \left( e^{j(\omega_{LO}t+\varphi_0)} - e^{-j(\omega_{LO}t+\varphi_0)} \right)
\end{aligned}
$$

$$\tag{52}$$

Das RF-Signal $x_{RF}(t)$ am Ausgang 110 des Modulators 100 wird anschließend an den Eingang 2 des Demodulators 1 geführt und in einem bezüglich seiner Signalfehler $\Delta\varphi_D$, $\dfrac{a_{ID}}{a_{QD}}$, $c_{ID}$ und $c_{QD}$ ideal kompensierten Demodulator 1 ins Basisband heruntergemischt, wobei ein Trägersignal $x_T(t)$ gemäß Gleichung (53) benutzt wird:

$$x_T(t) \;=\; e^{-j(\omega_M t + \varphi_1)} \tag{53}$$

Real- und Imaginärteil des Trägersignals $x_T(t)$ gemäß Gleichung (53) stehen zueinander in Quadratur und werden als erstes bzw. zweites Trägersignal der ersten bzw. zweiten Mischerstufe 3 bzw. 4 zugeführt. Die Anfangsphase $\varphi_1$ gibt den unbestimmten Zustand des ersten und zweiten Trägersignals des Demodulators 1 zum Zeitpunkt t=0 an.

Zusätzlich erfolgt mittels Filterung im bzw. im Anschluß an den Demodulator 1 eine Unterdrückung aller Mischprodukte der Kreisfrequenzen $-2\cdot\omega_{LO}\pm\omega_{NF}$ bzw. $-2\cdot\omega_{LO}$ des ins Basisband heruntergemischten RF-Signals $x_{RF}(t)$. Das ins Basisband heruntergemischte und entsprechend gefilterte RF-Signal $x_{HF}(t)$ steht als demoduliertes Signal $x_{Demod}(t)$ gemäß Gleichung (54) am Ausgang 13 des Demodulators 1 an:

$$
\begin{aligned}
x_{\text{demod}}(t) &= filter\left( x_{RF}(t)\cdot e^{-j(\omega_{LO}t+\varphi_1)} \right) \\
&= \frac{1}{4}\left( e^{j((\omega_{LO}+\omega_{NF})t+\varphi_0)} e^{-j(\omega_{LO}t+\varphi_1)} \left( a_{IM} e^{+j\Delta\varphi_M} + a_{QM} \right) \right) + \\
&\quad + \frac{1}{4}\left( e^{j((\omega_{LO}-\omega_{NF})t+\varphi_0)} e^{-j(\omega_{LO}t+\varphi_1)} \left( a_{IM} e^{j\Delta\varphi_M} - a_{QM} \right) \right) + \\
&\quad + \frac{1}{2} e^{j(\omega_{LO}t+\varphi_0)} e^{-j(\omega_{LO}t+\varphi_1)} \left( c_{IM} e^{+j\Delta\varphi_M} + j c_{QM} \right) + \\
&\quad + \frac{1}{2} e^{-j(\omega_{LO}t+\varphi_0)} e^{-j(\omega_{LO}t+\varphi_1)} \left( c_{IM} e^{-j\Delta\varphi_M} - j c_{QM} \right) \\
&= \frac{1}{4} e^{j(\varphi_0-\varphi_1)}\cdot e^{j\omega_{NF}t}\cdot \left( a_{IM} e^{j\Delta\varphi_M} + a_{QM} \right) + \\
&\quad + \frac{1}{4} e^{j(\varphi_0-\varphi_1)}\cdot e^{-j\omega_{NF}t}\cdot \left( a_{IM} e^{j\Delta\varphi_M} - a_{QM} \right) + \\
&\quad + \frac{1}{2} e^{j(\varphi_0-\varphi_1)}\cdot \left( c_{IM} e^{j\Delta\varphi_M} + j c_{QM} \right)
\end{aligned}
\tag{54}
$$

Werden für die komplexen Terme in Gleichung (54) die komplexen Konstanten $A_M$, $B_M$ und $C_M$ gemäß der Gleichungen (55), (56) und (57) eingeführt, so geht Gleichung (54) in Gleichung (58) über.

$$A_M \;=\; \frac{1}{4} e^{j(\varphi_0-\varphi_1)} \cdot (a_{IM}\cdot e^{j\Delta\varphi_M} + a_{QM}) \;=\; A_{IM} + jA_{QM} \tag{55}$$

$$B_M \;=\; \frac{1}{4} e^{j(\varphi_0-\varphi_1)} \cdot (a_{IM}\cdot e^{j\Delta\varphi_M} - a_{QM}) \;=\; B_{IM} + jB_{QM} \tag{56}$$

$$C_M \;=\; \frac{1}{2} e^{j(\varphi_0-\varphi_1)} \cdot (c_{IM}\cdot e^{j\Delta\varphi_M} + jc_{QM}) \;=\; C_{IM} + jC_{QM} \tag{57}$$

$$x_{Demod}(t) \;=\; A_M\cdot e^{j\omega_{NF}t} + B_M\cdot e^{-j\omega_{NF}t} + C_M \tag{58}$$

Das demodulierte RF-Signal $x_{Demod}(t)$ enthält folglich zwei komplexe Drehzeiger, die gegenläufig jeweils mit der Kreisfrequenz $\omega_{NF}$ rotieren.

Vergleicht man die mathematische Beziehung für das Basisbandsignal $x_{Demod}(t)$ gemäß Gleichung (58), das aus einer Demodulation eines vom Modulator 100 gemäß Gleichung (52) erzeugten Hochfrequenzsignals $x_{RF}(t)$ im Demodulator 1 hervorgeht, mit dem Basisbandsignal $x(t)$ gemäß Gleichung (13), das aus einer Demodulation eines Hochfrequenz-Signals $\cos(\omega_{RF}t)$ im Demodulator 1 hervorgeht, so erkennt man Äquivalenz in der Gleichungsstruktur. Der Unterschied zwischen Gleichung (13) und (52) liegt einzig in der Interpretation der Parameter.

Während die komplexen Drehzeiger der Gleichung (13) jeweils eine Amplitude $A_D$, $B_D$ und $C_D$ aufweisen und mit der Kreisfrequenz $\pm\omega_0=\pm(\omega_{RF}-\omega_{LO})$ rotieren, weisen die komplexen Drehzeiger der Gleichung (58) jeweils eine Amplitude $A_M$, $B_M$ und $C_M$ auf und rotieren mit einer Kreisfrequenz von $\pm\omega_{NF}$.

Die Bestimmung der Komponenten $A_{IM}$, $A_{QM}$, $B_{IM}$, $B_{QM}$, $C_{IM}$ und $C_{QM}$ der komplexen Konstanten $A_M$, $B_M$ und $C_M$ in Gleichung (58) zu den Kreisfrequenzen $-\omega_{NF}$, 0 und $+\omega_{NF}$ kann in Analogie zur Bestimmung der Komponenten $A_{ID}$, $A_{QD}$, $B_{ID}$, $B_{QD}$, $c_{ID}$ und $c_{QD}$ der komplexen Konstanten $A_D$, $B_D$ und $C_D$ in Gleichung (13) für den Demodulator ebenfalls mittels des Maximum-Likelihood-Verfahrens ermittelt werden. Bei analoger Vorgehensweise und bei Benutzung der identischen mathematischen Beziehungen ist einzig an Stelle der Kreisfrequenz $\omega_0$ des Demodulators die Kreisfrequenz $\omega_{NF}$ des Inphase- bzw. Quadratur-Signals am den jeweiligen Eingängen 101 und 105 des Modulators 100 zu verwenden.

Die Ermittlung der Signalfehler $\Delta\varphi_M$, $\dfrac{a_{IM}}{a_{QM}}$, $c_{IM}$ und $c_{QM}$ in Abhängigkeit der durch das Maximum-Likelihood-Verfahren bestimmten komplexen Konstanten $A_M$, $B_M$ und $C_M$ erfolgt auf der Basis der Gleichungen (55), (56) und (57).

Für die Bestimmung des Quadraturfehlers $\Delta\varphi_M$ wird ausgehend von Gleichung (55) und (56) der mathematische Term $A_M+B_M$ in Gleichung (59) und der mathematische Term $A_M-B_M$ in Gleichung (60) gebildet.

$$
\begin{aligned}
A_M + B_M &= \frac{1}{4} e^{j(\varphi_0-\varphi_1)}\left(a_{IM}e^{j\Delta\varphi_M} + a_{QM}\right) + \frac{1}{4} e^{j(\varphi_0-\varphi_1)}\left(a_{IM}e^{j\Delta\varphi_M} - a_{QM}\right) = \\
&= \frac{1}{2} e^{j(\varphi_0-\varphi_1)} \cdot e^{j\Delta\varphi_M} \cdot a_{IM}
\end{aligned}
$$

$$(59)$$

$$
A_M - B_M = \frac{1}{4} e^{j(\varphi_0-\varphi_1)}\left(a_{IM}e^{j\Delta\varphi_M} + a_{QM}\right) - \frac{1}{4} e^{j(\varphi_0-\varphi_1)}\left(a_{IM}e^{j\Delta\varphi_M} - a_{QM}\right) = \frac{1}{2} e^{j(\varphi_0-\varphi_1)} a_{QM}
$$

$$(60)$$

Ausgehend von Gleichung (59) und (60) wird der mathematische Term $(A_M+B_M)\cdot(A_M-B_M)^*$ gemäß Gleichung (61):

$$
\left(A_M + B_M\right)\cdot\left(A_M - B_M\right)^* = \frac{1}{2} e^{j(\varphi_0-\varphi_1)} a_{IM} e^{j\Delta\varphi_M} \cdot \frac{1}{2} e^{-j(\varphi_0-\varphi_1)} a_{QM} = \frac{1}{4} a_{IM} a_{QM} e^{j\Delta\varphi_M} \qquad (61)
$$

Aus Gleichung (61) kann der Quadraturfehler $\Delta\varphi_M$ durch Argumentbildung gemäß Gleichung (62) gewonnen werden:

$$
\Delta\varphi_M = \arg\{(A_M+B_M)\cdot(A_M-B_M)^*\} \qquad (62)
$$

Für die Bestimmung der Gain-Imbalance ist wiederum das Verhältnis $\frac{a_{IM}}{a_{QM}}$ wesentlich. Hierzu werden ausgehend von Gleichung (59) und (60) die mathematischen Terme für $|A_M + B_M|$ und $|A_M - B_M|$ gemäß Gleichung (63) und (64) gebildet.

$$\left| A_M + B_M \right| = \left| \frac{1}{2} e^{j(\varphi_0 - \varphi_1)} a_{IM} e^{j\Delta\varphi_M} \right| = \frac{1}{2} a_{IM} \qquad (63)$$

$$\left| A_M - B_M \right| = \left| \frac{1}{2} e^{j(\varphi_0 - \varphi_1)} a_{QM} \right| = \frac{1}{2} a_{QM} \qquad (64)$$

Die Division der Gleichungen (63) und (64) führt zur mathematischen Beziehung der Gain-Imbalance $\frac{a_{IM}}{a_{QM}}$ in

Gleichung (65) :

$$\frac{a_{IM}}{a_{QM}} = \frac{\left| A_M + B_M \right|}{\left| A_M - B_M \right|} \qquad (65)$$

Für die Bestimmung der Gleichspannungs-Offsetfehler $c_{IM}$ und $c_{QM}$ gelten ausgehend von Gleichung (57) die mathematischen Beziehungen in Gleichung (66) und (67):

Aus Gleichung (60) lässt sich

$$e^{j(\varphi_0 - \varphi_1)} = \frac{A_M - B_M}{\left| A_M - B_M \right|} \qquad (66)$$

bestimmen (Anmerkung: Könnte alternativ auch über die Bildung des Arguments gemacht werden).

Aus Gleichung (57) mit Gleichung (66) folgt:

$$c_{IM} = \frac{2}{\cos(\Delta\varphi_M)} \cdot \mathrm{Re}\left\{ \left( C_{IM} + jC_{QM} \right) \cdot e^{-j(\varphi_0 - \varphi_1)} \right\} =$$

$$= \frac{2}{\cos(\Delta\varphi_M)} \cdot \mathrm{Re}\left\{ \left( C_{IM} + jC_{QM} \right) \cdot \frac{(A_M - B_M)^*}{\left| A_M - B_M \right|} \right\} \qquad (67)$$

und nach weiterer Rechnung

$$c_{QM} = -2\tan\left(\Delta\varphi_M\right)\cdot \operatorname{Re}\left\{\left(C_{IM} + jC_{QM}\right)\cdot e^{-j(\varphi_0-\varphi_1)}\right\} +$$

$$2\operatorname{Im}\left\{\left(C_{IM} + jC_{QM}\right)\cdot e^{-j(\varphi_0-\varphi_1)}\right\}$$

$$= -2\tan\left(\Delta\varphi_M\right)\cdot \operatorname{Re}\left\{\left(C_{IM} + jC_{QM}\right)\cdot \frac{\left(A_M - B_M\right)^{\bullet}}{\left|A_M - B_M\right|}\right\} +$$

$$2\operatorname{Im}\left\{\left(C_{IM} + jC_{QM}\right)\cdot \frac{\left(A_M - B_M\right)^{\bullet}}{\left|A_M - B_M\right|}\right\}$$

$$(68)$$

Im folgenden wird auf der Basis der bisherigen mathematischen Herleitungen das in Fig. 4 dargestellte erfindungsgemäße Verfahren zur Ermittlung von Signalfehlern in Modulatoren beschrieben.

In Verfahrensschritt S110 wird am Inphase-Eingang 101 des Modulators 100 ein Inphase-Signal $\cos(\omega_{NF}t)$ mit einer normierten Amplitude $A_{NF}$ von Eins und einer Kreisfrequenz $\omega_{NF}$ angelegt. Analog wird der Quadratur-Eingang 105 des Modulators 100 mit einem zum Inphase-Signal in Quadratur stehenden Quadratur-Signal $\sin(\omega_{NF}t)$ mit einer normierten Amplitude $A_{NF}$ von Eins und einer Kreisfrequenz $\omega_{NF}$ beaufschlagt.

Analog wird im nächsten Verfahrensschritt S120 an die dritte und vierte Mischerstufe 104 und 108 des Modulators 100 jeweils ein Trägersignal $x_{LO}(t)$ mit einer normierten Amplitude $A_{LO}$ von 1 und einer Trägerkreisfrequenz $\omega_{LO}$ angelegt, die in ihrer Phase zueinander in Quadratur stehen.

Der nächste Verfahrensschritt S130 beinhaltet das Messen des rauschbehafteten Ausgangsgangssignals $x(t)$ am Basisband-Ausgang 13 des Demodulators 1 über den Beobachtungszeitraum T.

Über das komplexe Basisbandmodell 1 des Demodulators mit den im erfindungsgemäßen Verfahren nach Fig. 2 ermittelten Signalfehlern des Demodulators wird im Verfahrensschritt S140 das rauschbehaftete Eingangssignal $x_{RF}(t)$ am Hochfrequenz-Eingang 2 des Demodulators 1, das gleichzeitig das rauschbehaftete Hochfrequenz-Ausgangssignal $x_{RF}(t)$ des Modulators 100 ist, ermittelt.

Auf der Basis des ermittelten rauschbehafteten Ausgangssignals $x_{RF}(t)$ und der bekannten Kreisfrequenz $\omega_{NF}$ des Inphase- und Quadratur-Signals werden die einzelnen Koeffizienten der Systemmatrix $\overline{A}$ und des Vektors $\underline{b}$ der rechten Gleichungsseite des linearen Gleichungssystems des Modulators, das dem linearen Gleichungssystem (42) des Demodulators mit der Kreisfrequenz $\omega_0$ und den Komponenten $A_{IM}$, $A_{QM}$, $B_{IM}$, $B_{QM}$, $C_{IM}$ und $C_{QM}$ der komplexen Konstanten $A_M$, $B_M$ und $C_M$ entspricht, mittels numerischer Integration im Verfahrensschritt S150 ermittelt.

Das in Verfahrensschritt S150 ermittelte lineare Gleichungssystem wird im darauffolgenden Verfahrensschritt S160 mit einem numerischen Verfahren zur Ermittlung des Lösungsvektors $\underline{x}$ des Modulators gelöst.

Schließlich werden im abschließenden Verfahrensschritt S170 die Signalfehler $\Delta\varphi_M$, $\dfrac{a_{IM}}{a_{QM}}$, $c_{IM}$ und $c_{QM}$ des Modulators 100 aus dem Lösungsvektors x unter Anwendung der mathematischen Beziehung in Gleichungen (62), (65), (67) und (68) berechnet.

Die Erfindung ist nicht auf die dargestellte Ausführungsform beschränkt. Das erfindungsgemäße Verfahren zur Bestimmung von Signalfehlern in Modulatoren und Demodulatoren kann sinngemäß auf andere nachrichtentechnische Übertragungsglieder wie beispielsweise Filter- und Verstärkerstufen, Entzerrer und Frequenzsynthesizer übertragen werden.

**Patentansprüche**

1. Verfahren zur Ermittlung von Signalfehlern ($\dfrac{a_{ID}}{a_{QD}}$, $\Delta\varphi_D$, $c_{ID}$, $c_{QD}$; $\dfrac{a_{IM}}{a_{QM}}$, $\Delta\varphi_M$, $C_{IM}$, $c_{QM}$) in einem Demodulator (1) oder Modulator (100), wobei die Signalfehler ($\dfrac{a_{ID}}{a_{QD}}$, $\Delta\varphi_D$, $C_{ID}$, $C_{QD}$; $\dfrac{a_{IM}}{a_{QM}}$, $\Delta\varphi_M$, $C_{IM}$, $C_{QM}$) in einem Inphase- und Quadratur-Signal des Demodulators (1) oder Modulators (2) jeweils auftretenden Gleichspannungs-Offsetfehler

($c_{ID}$, $c_{QD}$, $c_{IM}$, $c_{QM}$) sind, mit:

Ermitteln eines linearen Gleichungssystems durch Minimierung einer betragsquadrierten Signaldifferenz ($|m(t)-x(t)|^2$) zwischen einem rauschbehafteten, am Ausgang (13) des Demodulators (1) über einen Beobachtungszeitraum (T) gemessenen Signal (m(t)) und einem dazugehörigen rauschfreien Signal (x(t)) mittels des Maximum-Likelihood-Verfahrens, und

Ermitteln einer Lösung des linearen Gleichungssystems, um die Signalfehler ($\frac{a_{ID}}{a_{QD}}$, $\Delta\varphi_D$, $c_{ID}$, $c_{QD}$; $\frac{a_{IM}}{a_{QM}}$, $\Delta\varphi_M$, $c_{IM}$, $c_{QM}$) zu ermitteln.

2. Verfahren nach Anspruch 1, wobei zur Minimierung der betragsquadrierten Signaldifferenz ($|m(t)-x(t)|^2$) eine partielle Differentation nach reellen Komponenten $A_{ID}$, $A_{QD}$, $B_{ID}$, $B_{QD}$, $C_{ID}$ und $C_{QD}$ durchgeführt wird, wobei

$A_{ID}$ der Realteil der mit einer positiven Kreisfrequenz $\omega_0$ bzw. $\omega_{NF}$ behafteten Spektrallinie A des rauschfreien Signals x(t) beim Demodulator (1) bzw. des Inphase- bzw. Quadratur-Signals beim Modulator (100),
$A_{QD}$ der Imaginärteil $A_{QD}$ der mit einer positiven Kreisfrequenz $\omega_0$ bzw. $\omega_{NF}$ behafteten Spektrallinie $\underline{A}$ des rauschfreien Signals x(t) beim Demodulator (1) bzw. des Inphase- bzw. Quadratur-Signals beim Modulator (100),
$B_{ID}$ der Realteil der mit der negativen Kreisfrequenz $\omega_0$ bzw. $\omega_{NF}$ behafteten Spektral-linie $\underline{B}$ des rauschfreien Signals x(t) beim Demodulator (1) bzw. des Inphase- bzw. Quadratur-Signals beim Modulator (100),
$B_{QD}$ der Imaginärteil der mit der negativen Kreisfrequenz $\omega_0$ bzw. $\omega_{NF}$ behafteten Spektrallinie $\underline{B}$ des rauschfreien Signals x(t) beim Demodulator (1) bzw. des Inphase- bzw. Quadratur-Signals beim Modulator (100),
$c_{ID}$ der Gleichspannungs-Offsetfehler im Inphase-Signal des Modulators (100) bzw. Demodulators (1) und
$c_{QD}$ der Gleichspannungs-Offsetfehler im Quadratur-Signal des Modulators (100) bzw. Demodulators (1)

bedeuten.

3. Verfahren zur Ermittlung von Signalfehlern in einem Demodulator oder Modulator nach Anspruch 1,
**dadurch gekennzeichnet,**

**daß** das lineare Gleichungsystem zur Ermittlung der Signalfehler ($\frac{a_{ID}}{a_{QD}}$, $\Delta\varphi_D$, $C_{ID}$, $C_{QD}$; $\frac{a_{IM}}{a_{QM}}$, $\Delta\varphi_M$, $C_{IM}$, $C_{QM}$) folgender Matrizengleichung genügt:

$$\begin{bmatrix} T & 0 & \frac{1}{2\omega}\cdot(\sin 2\omega T) & -\frac{1}{2\omega}\cdot(\cos(2\omega T)-1) & \frac{1}{\omega_0}\cdot\sin(\omega T) & -\frac{1}{\omega_0}\cdot(\cos(\omega T)-1) \\ 0 & T & \frac{1}{2\omega}\cdot(\cos(2\omega T)-1) & \frac{1}{\omega}\cdot\sin(2\omega T) & \frac{1}{\omega_0}\cdot(\cos(\omega T)-1) & \frac{1}{\omega_0}\cdot\sin(\omega T) \\ \frac{1}{2\omega}\cdot(\sin(2\omega T)) & \frac{1}{2\omega}\cdot(\cos(2\omega T)-1) & T & 0 & \frac{i}{\omega_0}\cdot\sin(\omega T) & \frac{1}{\omega_0}\cdot(\cos(\omega T)-1) \\ -\frac{1}{2\omega}\cdot(\cos(2\omega T)-1) & \frac{1}{\omega}\cdot\sin(2\omega T) & 0 & T & -\frac{1}{\omega_0}\cdot(\cos(\omega T)-1) & \frac{1}{\omega_0}\cdot\sin(\omega T) \\ \frac{1}{\omega}\cdot\sin(\omega T) & \frac{1}{\omega}\cdot(\cos(\omega T)-1) & \frac{1}{\omega}\cdot\sin(\omega T) & -\frac{1}{\omega}\cdot(\cos(\omega T)-1) & T & T \\ -\frac{1}{\omega}\cdot(\cos(\omega T)-1) & \frac{1}{\omega}\cdot\sin(\omega T) & \frac{1}{\omega}\cdot(\cos(\omega T)-1) & \frac{1}{\omega}\cdot\sin(\omega T) & 0 & T \end{bmatrix} \cdot \begin{bmatrix} A_I \\ A_Q \\ B_I \\ B_Q \\ c_I \\ c_Q \end{bmatrix}$$

$$= \begin{bmatrix} \int \mathrm{Re}\left\{m(t)\cdot e^{-j\omega t}\right\} dt \\ \int \mathrm{Im}\left\{m(t)\cdot e^{-j\omega t}\right\} dt \\ \int \mathrm{Re}\left\{m(t)\cdot e^{j\omega t}\right\} dt \\ \int \mathrm{Im}\left\{m(t)\cdot e^{j\omega t}\right\} dt \\ \int \mathrm{Re}\left\{m(t)\right\} dt \\ \int \mathrm{Im}\left\{m(t)\right\} dt \end{bmatrix}$$

wobei

T der Beobachtungszeitraum,

$\omega$ die Kreisfrequenz $\omega_0$ als Differenz zwischen der Kreisfrequenz eines Hochfrequenz-Signals $x_{RF}(t)$ und der Kreisfrequenz des Trägersignals $x_{LO}(t)$ beim Demodulator (100) bzw. die Kreisfrequenz $\omega_{NF}$ des Inphase- bzw. Quadratur-Signals beim Modulator (1),

m(t) das rauschbehaftete Signal,

$A_I$ der Realteil $A_{ID}$ bzw. $A_{IM}$ der mit der positiven Kreisfrequenz $\omega_0$ bzw. $\omega_{NF}$ behafteten Spektrallinie $\underline{A}$ des rauschfreien Signals x(t) beim Demodulator (1) bzw. des Inphase- bzw. Quadratur-Signals beim Modulator (100), $A_Q$ der Imaginärteil $A_{QD}$ bzw. $A_{QM}$ der mit der positiven Kreisfrequenz $\omega_0$ bzw. $\omega_{NF}$ behafteten Spektrallinie $\underline{A}$ des rauschfreien Signals x(t) beim Demodulator (1) bzw. des Inphase- bzw. Quadratur-Signals beim Modulator (100),

$B_I$ der Realteil $B_{ID}$ bzw. $B_{IM}$ der mit der negativen Kreisfrequenz $\omega_0$ bzw. $\omega_{NF}$ behafteten Spektrallinie $\underline{B}$ des rauschfreien Signals x(t) beim Demodulator (1) bzw. des Inphase- bzw. Quadratur-Signals beim Modulator (100), $B_Q$ der Imaginärteil $B_{QD}$ bzw. $B_{QM}$ der mit der negativen Kreisfrequenz $\omega_0$ bzw. $\omega_{NF}$ behafteten Spektrallinie $\underline{B}$ des rauschfreien Signals x(t) beim Demodulator (1) bzw. des Inphase- bzw. Quadratur-Signals beim Modulator (100),

$c_I$ der Gleichspannungs-Offsetfehler $c_{ID}$ bzw. $c_{IM}$ im Inphase-Signal des Modulators (100) bzw. Demodulators (1) und

$c_Q$ der Gleichspannungs-Offsetfehler $c_{QD}$ bzw. $c_{QM}$ im Quadratur-Signal des Modulators (100) bzw. Demodulators (1)

bedeuten.

4. Verfahren zur Ermittlung von Signalfehlern in einem Demodulator oder Modulator nach Anspruch 3, **dadurch gekennzeichnet,**

**daß** das lineare Gleichungssystem zur Ermittlung der Signalfehler $\left(\dfrac{a_{ID}}{a_{QD}},\ \Delta\varphi_D,\ c_{ID},\ c_{QD};\ \dfrac{a_{IM}}{a_{QM}},\ \Delta\varphi_M,\ c_{IM},\ c_{QM}\right)$

durch die Matrizengleichung

$$\begin{bmatrix} 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & 1 & 0 & 0 \\ 0 & 0 & 0 & 0 & 1 & 0 \\ 0 & 0 & 0 & 0 & 0 & 1 \end{bmatrix} \cdot \begin{bmatrix} A_I \\ A_Q \\ B_I \\ B_Q \\ c_I \\ c_Q \end{bmatrix} = \begin{bmatrix} \dfrac{1}{n} \cdot \dfrac{\omega_0}{2\pi} \cdot \displaystyle\int_0^T \mathrm{Re}\left\{ m(t) \cdot e^{-j\omega t} \right\} dt \\[2.5ex] \dfrac{1}{n} \cdot \dfrac{\omega_0}{2\pi} \cdot \displaystyle\int_0^T \mathrm{Im}\left\{ m(t) \cdot e^{-j\omega t} \right\} dt \\[2.5ex] \dfrac{1}{n} \cdot \dfrac{\omega_0}{2\pi} \cdot \displaystyle\int_0^T \mathrm{Re}\left\{ m(t) \cdot e^{j\omega t} \right\} dt \\[2.5ex] \dfrac{1}{n} \cdot \dfrac{\omega_0}{2\pi} \cdot \displaystyle\int_0^T \mathrm{Im}\left\{ m(t) \cdot e^{j\omega t} \right\} dt \\[2.5ex] \dfrac{1}{n} \cdot \dfrac{\omega_0}{2\pi} \cdot \displaystyle\int_0^T \mathrm{Re}\left\{ m(t) \right\} dt \\[2.5ex] \dfrac{1}{n} \cdot \dfrac{\omega_0}{2\pi} \cdot \displaystyle\int_0^T \mathrm{Im}\left\{ m(t) \right\} dt \end{bmatrix}$$

beschrieben wird, wobei der Beobachtungszeitraums (T) der Gleichung

$$T = n \cdot \frac{2 \cdot \pi}{\omega}$$

genügt.

5. Verfahren zur Ermittlung von Signalfehlern in einem Demodulator oder Modulator nach einem der Ansprüche 1 bis 4, **dadurch gekennzeichnet,** **daß** zur Ermittlung der Signalfehlers des Demodulators (1) folgende Verfahrensschritte durchgeführt werden:

    • Beaufschlagung des Hochfrequenz-Eingangs (2) des Demodulators (1) mit einem Hochfrequenzsignal ($x_{RF}$(t)) mit bekannter Amplitude ($A_{RF}$) und bekannter Hochfrequenz-Kreisfrequenz ($\omega_{RF}$),
    • Einstellung eines Trägersignals ($X_{LO}$ (t)) mit bekannter Amplitude ($A_{LO}$) und bekannter Trägerkreisfrequenz ($\omega_{LO}$)
    • Messen des rauschbehafteten Signals (m(t)) an einem Basisband-Ausgang (13) des Demodulators (1) über einen bestimmten Beobachtungszeitraum (T),
    • Ermittlung der Koeffizienten einer Systemmatrix ($\overline{A}$) und eines Vektors ($\underline{b}$) einer "rechten Gleichungsseite" des linearen Gleichungssystems und

    • numerisches Lösen des linearen Gleichungssystems zur Gewinnung der Signalfehler ($\frac{a_{ID}}{a_{QD}}$, $\Delta\varphi_D$, $c_{ID}$, $c_{QD}$) des Demodulators (1).

6. Verfahren zur Ermittlung von Signalfehlern in einem Demodulator oder Modulator nach Anspruch 5, **dadurch gekennzeichnet,** **daß** nach der Ermittlung der Signalfehler ($\frac{a_{ID}}{a_{QD}}$, $\Delta\varphi_D$, $c_{ID}$, $c_{QD}$) des Demodulators (1) zur Ermittlung der Signalfehlers des Modulators (100) folgende Verfahrensschritte durchgeführt werden:

    • Verbinden des Hochfrequenz-Eingangs (2) des Demodulators (1) mit einem Hochfrequenz-Ausgang (112) des Modulators (100),
    • Beaufschlagung eines Inphase-Eingangs (101) und eines Quadratur-Eingangs (103) des Modulators (100) mit jeweils in Quadratur zueinander stehenden Basisbandsignalen mit bekannter Amplitude ($A_{NF}$) und bekannter

Kreisfrequenz ($\omega_{NF}$),

• Einstellung eines Trägersignals ($x_{LO}(t)$) mit bekannter Amplitude ($A_{LO}$) und bekannter Trägerkreisfrequenz ($\omega_{LO}$),

• Messen des rauschbehafteten Signals ($m(t)$) am Basisband-Ausgang (13) des Demodulators (1) über einen bestimmten Beobachtungszeitraum (T),

• Ermittlung des rauschbehafteten Hochfrequenz-Signals ($x_{RF}(t)$) am Hochfrequenz-Ausgang (112) des Modulators (100) über das komplexe Basisbandmodell des Demodulators (1),

• Ermittlung der Koeffizienten der Systemmatrix ($\overline{A}$) und des Vektors ($\underline{b}$) einer "rechten Gleichungsseite" des linearen Gleichungssystems des Modulators (100) und

• numerisches Lösen des linearen Gleichungssystems zur Gewinnung des Gleichspannungs-Offsetfehlers ($c_M$) des Modulators (100).

7. Digitales Speichermedium mit elektronisch auslesbaren Steuersignalen, die so mit einem programmierbaren Computer oder digitalen Signalprozessor zusammenwirken können, daß das Verfahren nach einem der Ansprüche 1 bis 6 ausgeführt wird.

8. Computerprogramm-Produkt mit auf einem maschinenlesbaren Träger gespeicherten Programmcode-Mitteln, um alle Schritte gemäß einem der Ansprüche 1 bis 6 durchführen zu können, wenn das Programm auf einem Computer oder einem digitalen Signalprozessor ausgeführt wird.

9. Computerprogramm mit Programmcode-Mitteln, um alle Schritte gemäß einem der Ansprüche 1 bis 6 durchführen zu können, wenn das Programm auf einem Computer oder einem digitalen Signalprozessor ausgeführt wird.

10. Computerprogramm mit Programmcode-Mitteln, um alle Schritte gemäß einem der Ansprüche 1 bis 6 durchführen zu können, wenn das Programm auf einem maschinenlesbaren Datenträger gespeichert ist.

**Claims**

1. Method for determining signal errors ($\frac{a_{ID}}{a_{QD}}$, $\Delta\varphi_D$, $c_{ID}$, $c_{QD}$; $\frac{a_{IM}}{a_{QM}}$, $\Delta\varphi_M$, $C_{IM}$, $C_{QM}$) in a demodulator (1) or modulator (100), wherein the signal errors ($\frac{a_{ID}}{a_{QD}}$, $\Delta\varphi_D$, $C_{ID}$, $c_{QD}$; $\frac{a_{IM}}{a_{QM}}$, $\Delta\varphi_M$, $C_{IM}$, $C_{QM}$) are in a direct-voltage offset error ($C_{ID}$, $C_{QD}$, $C_{IM}$, $C_{QM}$) occurring respectively in an in-phase signal and quadrature signal of the demodulator (1) or modulator (100), comprising:

   a determination of a linear equation system by minimising a modulus-squared signal difference ($|m(t)\text{-}x(t)|^2$) between a noise-contaminated signal ($m(t)$) measured at the output (13) of the demodulator (1) over an observation period (T) and an associated noiseless signal ($x(t)$) by means of the maximum-likelihood method, and

   a determination of a solution to the linear equation system, in order to determine the signal errors ($\frac{a_{ID}}{a_{QD}}$, $\Delta\varphi_D$, $c_{ID}$, $c_{QD}$; $\frac{a_{IM}}{a_{QM}}$, $\Delta\varphi_M$, $c_{IM}$, $c_{QM}$).

2. Method according to claim 1, wherein a partial differentiation according to real components $A_{ID}$, $A_{QD}$, $B_{ID}$, $B_{QD}$, $C_{ID}$ and $C_{QD}$ is implemented in order to minimise the modulus-squared signal difference ($|m(t)\text{-}x(t)|^2$) wherein $A_{ID}$ denotes the real component of the spectral line $\underline{A}$ provided with a positive angular frequency $\omega_0$ or $\omega_{NF}$ respectively of the noiseless signal $x(t)$ in the case of the demodulator (1) or of the in-phase signal or quadrature signal in the case of the modulator (100), $A_{QD}$ denotes the imaginary component $A_{QD}$ of the spectral line $\underline{A}$ provided with a positive angular frequency $\omega_0$ or $\omega_{NF}$ respectively of the noiseless signal $x(t)$ in the case of the demodulator (1) or of the in-phase signal or quadrature signal in the case of the modulator (100), $B_{ID}$ denotes the real component of the spectral line $\underline{B}$ provided with the negative angular frequency $\omega_0$ or $\omega_{NF}$ respectively of the noiseless signal $x(t)$ in the case of the demodulator (1) or of the in-phase signal or quadrature signal in the case of the modulator (100), $B_{QD}$ denotes the imaginary component of the spectral line $\underline{B}$ provided with the negative angular frequency $\omega_0$ or $\omega_{NF}$ respectively of the noiseless signal x(t) in the case of the demodulator (1) or of the in-phase signal or quadrature signal in the case of the modulator (100),

$C_{ID}$ denotes the direct voltage offset error in the in-phase signal of the modulator (100) or demodulator (1) and

$C_{QD}$ denotes the direct voltage offset error in the quadrature signal of the modulator (100) or demodulator (1).

**3.** Method for determining signal errors in a demodulator or modulator according to claim 1,
**characterised in that**

the linear equation system for determining the signal errors ($\frac{a_{ID}}{a_{QD}}$, $\Delta\varphi_D$, $c_{ID}$, $c_{QD}$; $\frac{a_{IM}}{a_{QM}}$, $\Delta\varphi_M$, $c_{IM}$, $c_{QM}$) satisfies

the following matrix equation:

$$
\begin{bmatrix}
T & 0 & \frac{1}{2\omega}\cdot(\sin 2\omega T) & -\frac{1}{2\omega}\cdot(\cos(2\omega T)-1) & \frac{1}{\omega_0}\cdot\sin(\omega T) & -\frac{1}{\omega_0}\cdot(\cos(\omega T)-1) \\
0 & T & \frac{1}{2\omega}\cdot(\cos(2\omega T)-1) & \frac{1}{\omega}\cdot\sin(2\omega T) & \frac{1}{\omega_0}\cdot(\cos(\omega T)-1) & \frac{1}{\omega_0}\cdot\sin(\omega T) \\
\frac{1}{2\omega}\cdot(\sin(2\omega T)) & \frac{1}{2\omega}\cdot(\cos(2\omega T)-1) & T & 0 & \frac{1}{\omega_0}\cdot\sin(\omega T) & \frac{1}{\omega_0}\cdot(\cos(\omega T)-1) \\
-\frac{1}{2\omega}\cdot(\cos(2\omega T)-1) & \frac{1}{\omega}\cdot\sin(2\omega T) & 0 & T & -\frac{1}{\omega_0}\cdot(\cos(\omega T)-1) & \frac{1}{\omega_0}\cdot\sin(\omega T) \\
\frac{1}{\omega}\cdot\sin(\omega T) & \frac{1}{\omega}\cdot(\cos(\omega T)-1) & \frac{1}{\omega}\cdot\sin(\omega T) & -\frac{1}{\omega}\cdot(\cos(\omega T)-1) & T & T \\
-\frac{1}{\omega}\cdot(\cos(\omega T)-1) & \frac{1}{\omega}\cdot\sin(\omega T) & \frac{1}{\omega}\cdot(\cos(\omega T)-1) & \frac{1}{\omega}\cdot\sin(\omega T) & 0 & T
\end{bmatrix}
\cdot
\begin{bmatrix}
A_I \\ A_Q \\ B_I \\ B_Q \\ c_I \\ c_Q
\end{bmatrix}
=
$$

$$
\begin{bmatrix}
\int \mathrm{Re}\left\{m(t)\cdot e^{-j\omega t}\right\}dt \\
\int \mathrm{Im}\left\{m(t)\cdot e^{-j\omega t}\right\}dt \\
\int \mathrm{Re}\left\{m(t)\cdot e^{j\omega t}\right\}dt \\
\int \mathrm{Im}\left\{m(t)\cdot e^{j\omega t}\right\}dt \\
\int \mathrm{Re}\left\{m(t)\right\}dt \\
\int \mathrm{Im}\left\{m(t)\right\}dt
\end{bmatrix}
$$

wherein

T denotes the observation period,

$\omega$ denotes the angular frequency $\omega_0$ as a difference between the angular frequency of a high-frequency signal $x_{RF}(t)$ and the angular frequency of the carrier signal $x_{LO}(t)$ in the case of the demodulator (100) or the angular frequency $\omega_{NF}$ of the in-phase signal or quadrature signal in the case of the modulator (1), m(t) denotes the noise-contaminated signal,

$A_I$ denotes the real component $A_{ID}$ or respectively $A_{IM}$ of the spectral line $\underline{A}$, provided respectively with a positive angular frequency $\omega_0$ or $\omega_{NF}$, of the noiseless signal x(t) in the case of the demodulator (1) or of the in-phase signal or quadrature signal in the case of the modulator (100),

$A_Q$ denotes the imaginary component $A_{QD}$ or respectively $A_{QM}$ of the spectral line $\underline{A}$ provided respectively with a positive angular frequency $\omega_0$ or $\omega_{NF}$ of the noiseless signal x(t) in the case of the demodulator (1) or of the in-phase signal or quadrature signal in the case of the modulator (100), $B_I$ denotes the real component $B_{ID}$ or respectively $B_{IM}$ of the spectral line $\underline{B}$ provided respectively with the negative angular frequency $\omega_0$ or $\omega_{NF}$ of the noiseless signal x(t) in the case of the demodulator (1) or of the in-phase signal or quadrature signal in the case of the modulator (100),

$B_Q$ denotes the imaginary component $B_{QD}$ or respectively $B_{QM}$ of the spectral line $\underline{B}$ provided respectively with the negative angular frequency $\omega_0$ or $\omega_{NF}$ of the noiseless signal x(t) in the case of the demodulator (1) or of the in-phase signal or quadrature signal in the case of the modulator (100), $C_I$ denotes the direct voltage offset error $C_{ID}$ or respectively $C_{IM}$ in the in-phase signal of the modulator (100) or demodulator (1) and $C_Q$ denotes the direct voltage offset error $C_{QD}$ or respectively $C_{QM}$ in the quadrature signal of the modulator (100) or demodulator (1).

4. Method for determining signal errors in a demodulator or modulator according to claim 3, **characterised in that**

the linear equation system for determining the signal errors ($\frac{a_{ID}}{a_{QD}}$, $\Delta\varphi_D$, $c_{ID}$, $c_{QD}$; $\frac{a_{IM}}{a_{QM}}$, $\Delta\varphi_M$, $c_{IM}$, $c_{QM}$) is described by the matrix equation:

$$
\begin{bmatrix}
1 & 0 & 0 & 0 & 0 & 0 \\
0 & 1 & 0 & 0 & 0 & 0 \\
0 & 0 & 1 & 0 & 0 & 0 \\
0 & 0 & 0 & 1 & 0 & 0 \\
0 & 0 & 0 & 0 & 1 & 0 \\
0 & 0 & 0 & 0 & 0 & 1
\end{bmatrix}
\cdot
\begin{bmatrix}
A_I \\ A_Q \\ B_I \\ B_Q \\ c_I \\ c_Q
\end{bmatrix}
=
\begin{bmatrix}
\frac{1}{n} \cdot \frac{\omega_0}{2\pi} \cdot \int_0^T \mathrm{Re}\left\{ m(t) \cdot e^{-j\omega t} \right\} dt \\[6pt]
\frac{1}{n} \cdot \frac{\omega_0}{2\pi} \cdot \int_0^T \mathrm{Im}\left\{ m(t) \cdot e^{-j\omega t} \right\} dt \\[6pt]
\frac{1}{n} \cdot \frac{\omega_0}{2\pi} \cdot \int_0^T \mathrm{Re}\left\{ m(t) \cdot e^{j\omega t} \right\} dt \\[6pt]
\frac{1}{n} \cdot \frac{\omega_0}{2\pi} \cdot \int_0^T \mathrm{Im}\left\{ m(t) \cdot e^{j\omega t} \right\} dt \\[6pt]
\frac{1}{n} \cdot \frac{\omega_0}{2\pi} \cdot \int_0^T \mathrm{Re}\left\{ m(t) \right\} dt \\[6pt]
\frac{1}{n} \cdot \frac{\omega_0}{2\pi} \cdot \int_0^T \mathrm{Im}\left\{ m(t) \right\} dt
\end{bmatrix}
$$

wherein the observation period (T) satisfies the equation

$$ T = n \cdot \frac{2 \cdot \pi}{\omega} $$

5. Method for determining signal errors in a demodulator or modulator according to any one of claims 1 to 4, **characterised in that**
the following procedural stages are implemented in order to determine the signal errors of the demodulator (1):

- providing the high-frequency input (2) of the demodulator (1) with a high-frequency signal ($X_{RF}(t)$) of known amplitude ($A_{RF}$) and known high-frequency angular frequency ($\omega_{RF}$),
- adjusting a carrier signal ($x_{LO}(t)$) of known amplitude ($A_{LO}$) and known carrier angular frequency ($\omega_{LO}$),
- measuring the noise-contaminated signal ($m(t)$) at a baseband output (13) of the demodulator (1) over a given observation period (T),
- determining the coefficients of a system matrix $\overline{A}$ and of a vector ($\underline{b}$) of a "right-hand side" of the linear equation system and

- resolving the linear equation system numerically in order to obtain the signal errors ($\frac{a_{ID}}{a_{QD}}$, $\Delta\varphi_D$, $c_{ID}$, $c_{QD}$) of the demodulator (1).

6. Method for determining signal errors in a demodulator or modulator according to claim 5,

**characterised in that**

the following procedural stages are implemented after determining the signal errors ($\frac{a_{ID}}{a_{QD}}$, $\Delta\varphi_D$, $c_{ID}$, $c_{QD}$) of the demodulator (1) in order to determine the signal errors of the modulator (100):

- connecting the high-frequency input (2) of the demodulator (1) to a high-frequency output (112) of the modulator (100),
- providing an in-phase input (101) and a quadrature input (103) of the modulator (100) in each case with baseband signals of known amplitude ($A_{NF}$) and known angular frequency ($\omega_{NF}$) disposed in quadrature relative to one another
- adjusting a carrier signal ($x_{LO}(t)$) of known amplitude ($A_{LO}$) and known carrier angular frequency ($\omega_{LO}$),
- measuring the noise-contaminated signal ($m(t)$) at the baseband output (13) of the demodulator (1) over a given observation period (T),
- determining the noise-contaminated high-frequency signal ($x_{RF}(t)$) at the high-frequency output (112) of the modulator (100) via the complex baseband model of the demodulator (1),
- determining the coefficients of the system matrix ($\overline{A}$) and of the vector ($\underline{b}$) of a "right-hand side" of the linear equation system of the modulator (100) and
- resolving the linear equation system numerically in order to obtain the direct voltage offset error ($c_M$) of the modulator (100).

7. Digital storage medium with electronically-readable control signals, which can cooperate with a programmable computer or digital signal processor in such a manner that the method according to any one of claims 1 to 6 can be executed.

8. Computer software product with program code means stored on a machine-readable carrier for the implementation of all of the stages according to any one of claims 1 to 6, when the software is run on a computer or a digital signal processor.

9. Computer software with program code means for the implementation of all of the stages according to any one of claims 1 to 6, when the software is run on a computer or a digital signal processor.

10. Computer software with program code means for the implementation of all of the stages according to any one of claims 1 to 6, when the software is stored on a machine-readable data medium.

**Revendications**

1. Procédé de détermination d'erreurs de signaux ($d_{ID}/d_{QD}$, $\Delta\varphi_D$, $C_{ID}$, $C_{QD}$ ; $a_{IM}/a_{QM}$, $\Delta\varphi_M$, $C_{IM}$, $C_{QM}$) dans un démodulateur (1) ou dans un modulateur (100), dans lequel les erreurs de signaux ($d_{ID}/d_{QD}$, $\Delta\varphi_D$, $C_{ID}$, $C_{QD}$ ; $a_{IM}/a_{QM}$, $\Delta\varphi_M$, $C_{IM}$, $C_{QM}$) sont des erreurs d'offset de tension continue ($C_{ID}$, $C_{QD}$, $C_{IM}$, $C_{QM}$) apparaissant dans un signal en phase ou en quadrature du démodulateur (1) ou du modulateur (2), avec :

la détermination d'un système d'équation linéaire grâce à la minimisation d'une différence de signal dont la valeur absolue est élevée au carré ($|m(t) - x(t)|^2$) entre un signal avec un bruit ($m(t)$), mesuré sur une période d'observation (T) à la sortie du démodulateur (1) et un signal sans bruit ($x(t)$) correspondant, à l'aide du procédé du maximum de vraisemblance et
la détermination d'une solution du système d'équations linéaire afin de déterminer les erreurs du signal ($d_{ID}/d_{QD}$, $\Delta\varphi_D$, $C_{ID}$, $C_{QD}$; $a_{IM}/a_{QM}$, $\Delta\varphi_M$, $C_{IM}$, $C_{QM}$).

2. Procédé selon la revendication 1, dans lequel, pour la minimisation de la différence de signal dont la valeur absolue est élevée au carré ($|m(t) - x(t)|^2$), une différenciation partielle est effectuée selon des composants réels $A_{ID}$, $A_{QD}$, $B_{ID}$, $B_{QD}$, $C_{ID}$ et $C_{QD}$, dans lequel :

$A_{ID}$ est la partie réelle de la ligne spectrale $\underline{A}$ de fréquence de pulsation positive $\omega_0$ ou $\omega_{NF}$ du signal sans bruit $x(t)$ dans le démodulateur (1) ou du signal en phase ou en quadrature du modulateur (100),
$A_{QD}$ est la partie imaginaire $A_{QD}$ de la ligne spectrale $\underline{A}$ de fréquence de pulsation positive $\omega_0$ ou $\omega_{NF}$ du signal sans bruit $x(t)$ dans le démodulateur (1) ou du signal en phase ou en quadrature du modulateur (100),

$B_{ID}$ est la partie réelle de la ligne spectrale $\underline{B}$ de fréquence de pulsation négative $\omega_0$ ou $\omega_{NF}$ du signal sans bruit x(t) dans le démodulateur (1) ou du signal en phase ou en quadrature du modulateur (100),

$B_{QD}$ est la partie imaginaire de la ligne spectrale $\underline{B}$ de fréquence de pulsation négative $\omega_0$ ou $\omega_{NF}$ du signal sans bruit x(t) dans le démodulateur (1) ou du signal en phase ou en quadrature du modulateur (100),

$C_{ID}$ est l'erreur d'offset de tension continue dans le signal en phase du modulateur (100) ou du démodulateur (1) et $C_{QD}$ est l'erreur d'offset de tension continue dans le signal en quadrature du modulateur (100) ou du démodulateur (1).

3. Procédé de détermination d'erreurs de signaux dans un démodulateur ou dans un modulateur selon la revendication 1, **caractérisé en ce que** le système d'équations linéaires suffit à déterminer l'erreur de signal ($d_{ID}/d_{QD}$, $\Delta\varphi_D$, $C_{ID}$, $C_{QD}$; $a_{IM}/a_{QM}$, $\Delta\varphi_M$, $C_{IM}$, $C_{QM}$) de l'équation matricielle suivante :

$$
\begin{bmatrix}
T & 0 & \frac{1}{2\omega}\cdot(\sin 2\omega T) & -\frac{1}{2\omega}\cdot(\cos(2\omega T)-1) & \frac{1}{\omega}\cdot\sin(\omega T) & -\frac{1}{\omega}\cdot(\cos(\omega T)-1) \\
0 & T & \frac{1}{2\omega}\cdot(\cos(2\omega T)-1) & \frac{1}{\omega}\cdot\sin(2\omega T) & \frac{1}{\omega}\cdot(\cos(\omega T)-1) & \frac{1}{\omega}\cdot\sin(\omega T) \\
\frac{1}{2\omega}\cdot(\sin(2\omega T)) & \frac{1}{2\omega}\cdot(\cos(2\omega T)-1) & T & 0 & \frac{1}{\omega}\cdot\sin(\omega T) & \frac{1}{\omega}\cdot(\cos(\omega T)-1) \\
-\frac{1}{2\omega}\cdot(\cos(2\omega T)-1) & \frac{1}{\omega}\cdot\sin(2\omega T) & 0 & T & -\frac{1}{\omega}\cdot(\cos(\omega T)-1) & \frac{1}{\omega}\cdot\sin(\omega T) \\
\frac{1}{\omega}\cdot\sin(\omega T) & \frac{1}{\omega}\cdot(\cos(\omega T)-1) & \frac{1}{\omega}\cdot\sin(\omega T) & -\frac{1}{\omega}\cdot(\cos(\omega T)-1) & T & T \\
-\frac{1}{\omega}\cdot(\cos(\omega T)-1) & \frac{1}{\omega}\cdot\sin(\omega T) & \frac{1}{\omega}\cdot(\cos(\omega T)-1) & \frac{1}{\omega}\cdot\sin(\omega T) & 0 & T
\end{bmatrix}
\cdot
\begin{bmatrix}
A_I \\ A_Q \\ B_I \\ B_Q \\ C_I \\ C_Q
\end{bmatrix}
$$

$$
=
\begin{bmatrix}
\int Re\left\{m(t)\cdot e^{-j\omega t}\right\}dt \\
\int Im\left\{m(t)\cdot e^{-j\omega t}\right\}dt \\
\int Re\left\{m(t)\cdot e^{j\omega t}\right\}dt \\
\int Im\left\{m(t)\cdot e^{j\omega t}\right\}dt \\
\int Re\left\{m(t)\right\}dt \\
\int Im\left\{m(t)\right\}dt
\end{bmatrix}
$$

T étant la période d'observation

$\omega$ est la fréquence de pulsation $\omega_0$ en tant que différence entre la fréquence de pulsation d'un signal à haute fréquence $x_{RF}(t)$ et la fréquence de pulsation du signal de porteuse $x_{LO}(t)$ dans le démodulateur (100) ou la fréquence de pulsation $\omega_{NF}$ du signal en phase ou en quadrature dans le modulateur (1),

m(t) est le signal avec bruit,

$A_I$ est la partie réelle $A_{ID}$ ou $A_{IM}$ de la ligne spectrale $\underline{A}$ de fréquence de pulsation positive $\omega_0$ ou $\omega_{NF}$ du signal sans bruit x(t) dans le démodulateur (1) ou du signal en phase ou en quadrature du modulateur (100),

$A_Q$ est la partie imaginaire $A_{QD}$ ou $A_{QM}$ de la ligne spectrale $\underline{A}$ de fréquence de pulsation positive $\omega_0$ ou $\omega_{NF}$ du signal sans bruit x(t) dans le démodulateur (1) ou du signal en phase ou en quadrature du modulateur (100),

$B_I$ est la partie réelle $B_{ID}$ ou $B_{IM}$ de la ligne spectrale $\underline{B}$ de fréquence de pulsation négative $\omega_0$ ou $\omega_{NF}$ du signal sans bruit x(t) dans le démodulateur (1) ou du signal en phase ou en quadrature du modulateur (100),

$B_Q$ est la partie imaginaire $B_{QD}$ ou $B_{QM}$ de la ligne spectrale $\underline{B}$ de fréquence de pulsation négative $\omega_0$ ou $\omega_{NF}$ du signal sans bruit x(t) dans le démodulateur (1) ou du signal en phase ou en quadrature du modulateur (100),

CI est l'erreur d'offset de tension continue $C_{ID}$ ou $C_{IM}$ dans le signal en phase du modulateur (100) ou du démodulateur (1) et

$C_Q$ est l'erreur d'offset de tension continue $C_{QD}$ ou $C_{QM}$ dans le signal en quadrature du modulateur (100) ou du démodulateur (1)

4. Procédé de détermination d'erreurs de signaux dans un démodulateur ou un modulateur selon la revendication 3, **caractérisé en ce que** le système d'équations linéaire des erreurs de signaux ($d_{ID}/d_{QD}$, $\Delta\varphi_D$, $C_{ID}$, $C_{QD}$ ; $a_{IM}/a_{QM}$,

$\Delta\varphi_M$, $C_{IM}$, $C_{QM}$) est décrit à l'aide de l'équation matricielle :

$$
\begin{bmatrix}
1 & 0 & 0 & 0 & 0 & 0 \\
0 & 1 & 0 & 0 & 0 & 0 \\
0 & 0 & 1 & 0 & 0 & 0 \\
0 & 0 & 0 & 1 & 0 & 0 \\
0 & 0 & 0 & 0 & 1 & 0 \\
0 & 0 & 0 & 0 & 0 & 1
\end{bmatrix}
\cdot
\begin{bmatrix}
A_I \\
A_Q \\
B_I \\
B_Q \\
c_I \\
c_Q
\end{bmatrix}
=
\begin{bmatrix}
\frac{1}{n} \cdot \frac{\omega_0}{2\pi} \cdot \int_0^T Re\{m(t) \cdot e^{-j\omega t}\} dt \\
\frac{1}{n} \cdot \frac{\omega_0}{2\pi} \cdot \int_0^T Im\{m(t) \cdot e^{-j\omega t}\} dt \\
\frac{1}{n} \cdot \frac{\omega_0}{2\pi} \cdot \int_0^T Re\{m(t) \cdot e^{j\omega t}\} dt \\
\frac{1}{n} \cdot \frac{\omega_0}{2\pi} \cdot \int_0^T Im\{m(t) \cdot e^{j\omega t}\} dt \\
\frac{1}{n} \cdot \frac{\omega_0}{2\pi} \cdot \int_0^T Re\{m(t)\} dt \\
\frac{1}{n} \cdot \frac{\omega_0}{2\pi} \cdot \int_0^T Im\{m(t)\} dt
\end{bmatrix}
$$

la période d'observation (T) de l'équation
T = n . (2π/ω) étant suffisante.

5. Procédé de détermination d'erreurs de signaux dans un démodulateur ou un modulateur selon une des revendications 1 à 4, **caractérisé en ce que**, pour la détermination de l'erreur du signal du démodulateur (1) les étapes de procédé suivantes sont effectuées :

- application d'un signal à haute fréquence ($x_{RF}(t)$) avec une amplitude connue ($A_{RF}$) et une haute fréquence de pulsation ($\omega_{RF}$) à l'entrée à haute fréquence (2) du démodulateur (1),
- ajustement d'un signal de porteuse ($x_{LO}(t)$) avec une amplitude connue ($A_{LO}$) et une fréquence de pulsation porteuse ($\omega_{LO}$),
- mesure du signal avec bruit (m(t)) au niveau d'une sortie à bande de base (13) du démodulateur (1) sur une période d'observation (T) déterminée,
- détermination des coefficients d'une matrice de système ($\overline{A}$) et d'un vecteur ($\underline{b}$) du « côté droit de l'équation » du système d'équations linéaire et
- résolution numérique du système d'équations linéaire pour l'obtention de l'erreur du signal ($d_{ID}/d_{QD}$, $\Delta\varphi_D$, $C_{ID}$, $C_{QD}$; $a_{IM}/a_{QM}$, $\Delta\varphi_M$, $C_{IM}$, $C_{QM}$) du démodulateur.

6. Procédé de détermination d'erreurs de signaux dans un démodulateur ou un modulateur selon la revendication 5, **caractérisé en ce que**, après la détermination de l'erreur de signal ($d_{ID}/d_{QD}$, $\Delta\varphi_D$, $C_{ID}$, $C_{QD}$; $a_{IM}/a_{QM}$, $\Delta\varphi_M$, $C_{IM}$, $C_{QM}$) du démodulateur (1), les étapes de procédé suivantes sont effectuées pour déterminer l'erreur de signal du modulateur (100) :

- liaison de l'entrée à haute fréquence (2) du démodulateur (1) avec une sortie à haute fréquence (112) du modulateur (100),
- application de signaux en bande de base en quadrature les uns par rapport aux autres, avec une amplitude connue ($A_{NF}$) et une fréquence de pulsation connue ($\omega_{NF}$) au niveau d'une entrée en phase (101) et d'une entrée en quadrature (103) du modulateur (100),
- ajustement d'un signal de porteuse ($x_{LO}(t)$) avec une amplitude connue ($A_{LO}$) et une fréquence de pulsation porteuse connue ($\omega_{LO}$),
- mesure du signal avec bruit (m(t)) au niveau de la sortie en bande de base (13) du démodulateur (1) sur une période d'observation (T) déterminée,

• détermination du signal à haute fréquence avec du bruit (xRF(t)) au niveau de la sortie à haute fréquence (112) du modulateur (100) sur le modèle en bande de base complexe du démodulateur (1),
• détermination des coefficients de la matrice du système ($\overline{A}$) et du vecteur ($\underline{b}$) du « côté droit de l'équation » du système d'équations linéaire du modulateur (100) et
• résolution numérique du système d'équations linéaire pour l'obtention de l'erreur d'offset de la tension continue ($C_M$) du modulateur (100).

7. Support de stockage numérique avec des signaux de contrôle lisibles de manière électroniques, pouvant interagir avec un ordinateur programmable ou un processeur numérique de signaux de façon à ce que le procédé soit effectué selon l'une des revendications 1 à 6.

8. Produit logiciel avec des codes de programmes stockés sur un support lisible par une machine, permettant d'effectuer toutes les étapes selon les revendications 1 à 6 lorsque le programme est exécuté sur un ordinateur ou un processeur numérique de signaux.

9. Programme informatique avec des codes de programmes permettant d'effectuer toutes les étapes selon les revendications 1 à 6 lorsque le programme est exécuté sur un ordinateur ou un processeur numérique de signaux.

10. Programme informatique avec des codes de programmes permettant d'effectuer toutes les étapes selon les revendications 1 à 6 lorsque le programme est enregistré sur un support de données lisible par une machine.

Fig. 1

Fig. 3

START

Beaufschlagung des HF–Eingangs des Demodulators mit einem HF–Signal $x_{RF}(t)$ mit bekannter Amplitude $A_{RF}$ und Kreisfrequenz $\omega_{RF}$ — S10

Einstellung des Trägersignals $x_{LO}(t)$ mit bekannter Amplitude $A_{LO}$ und Kreisfrequenz $\omega_{LO}$ — S20

Messen des rauschbehafteten Signals $m(t)$ am Basisband–Ausgang des Demulators über Beobachtungszeitraum T — S30

Ermitteln der Koeffizienten der System-matrix $\overline{A}$ und des Vektors $\underline{b}$ der "rechten Gleichungsseite" des linearen Gleichungssystems — S40

numerisches Lösen des linearen Gleichungssystems zur Ermittlung des Lösungsvektors $\underline{x}$ — S50

Ermittlung der Signalfehler $\Delta\varphi_D$, $\frac{a_{ID}}{a_{QD}}$, $c_{ID}$ und $c_{QD}$ des Demulators aus dem Lösungsvektor $\underline{x}$ — S60

ENDE

Fig. 2

START

Beaufschlagung des Inphase-und Quadraturphase-Eingangs des Modulators mit jeweils einem in Quadratur zueinander stehenden Basisbandsignal mit bekannter Amplitude $A_{NF}$ und Kreisfrequenz $\omega_{NF}$ ——S110

Einstellung des Trägersignals $x_{LO}(t)$ mit bekannter Amplitude $A_{LO}$ und Kreisfrequenz $\omega_{LO}$ ——S120

Messen des rauschbehafteten Signals $m(t)$ am Basisband-Ausgang des Demodulators über Beobachtungszeitraum T ——S130

Ermittlung des rauschbehafteten HF-Signals $x_{RF}(t)$ am Ausgang des Modulators über das komplexe Basisbandmodell des Demulators(inkl der Signalfehler ——S140

Ermitteln der Koeffizienten der Systemmatrix $\bar{A}$ und des Vektors $\underline{b}$ bei der "rechten Gleichungsseite" des linearen Gleichungssystem des Modulators ——S150

numerisches Lösen des linearen Gleichungssystem zur Ermittlung des Lösungsvektors $\underline{x}$ des Modulators ——S160

Ermittlung der Signalfehler $\Delta\varphi_M$, $\frac{\sigma_{IM}}{\sigma_{QM}}$, $c_{IM}$ und $c_{QM}$ des Modulators aus dem Lösungsvektor $\underline{x}$ ——S170

ENDE

Fig. 4

| | Terme vor $A_{ID}$ | Terme vor $A_{QD}$ | Terme vor $B_{ID}$ | Terme vor $B_{QD}$ | Terme vor $C_{ID}$ | Terme vor $C_{QD}$ | Terme mit $m(t)$ |
|---|---|---|---|---|---|---|---|
| $\dfrac{\delta\lvert m(t)-x(t)\rvert^2}{\delta A_{ID}} =$ | 2 | 0 | $+2\mathrm{Re}\{e^{+2j\omega_0 t}\}$ | $+2\mathrm{Re}\{-je^{+2j\omega_0 t}\}$ | $+2\mathrm{Re}\{e^{+j\omega_0 t}\}$ | $+2\mathrm{Re}\{-je^{+j\omega_0 t}\}$ | $-2\mathrm{Re}\{m(t)\cdot e^{-j\omega_0 t}\}$ |
| $\dfrac{\delta\lvert m(t)-x(t)\rvert^2}{\delta A_{QD}} =$ | 0 | 2 | $+2\mathrm{Re}\{je^{+2j\omega_0 t}\}$ | $+2\mathrm{Re}\{-jje^{+2j\omega_0 t}\}$ | $+2\mathrm{Re}\{je^{+j\omega_0 t}\}$ | $+2\mathrm{Re}\{-jje^{+j\omega_0 t}\}$ | $-2\mathrm{Re}\{-j\cdot m(t)\cdot e^{-j\omega_0 t}\}$ |
| $\dfrac{\delta\lvert m(t)-x(t)^2\rvert}{\delta B_{ID}} =$ | $+2\mathrm{Re}\{e^{+2j\omega_0 t}\}$ | $+2\mathrm{Re}\{je^{+2j\omega_0 t}\}$ | 2 | 0 | $+2\mathrm{Re}\{e^{-j\omega_0 t}\}$ | $+2\mathrm{Re}\{-je^{-j\omega_0 t}\}$ | $-2\mathrm{Re}\{m(t)\cdot e^{+j\omega_0 t}\}$ |
| $\dfrac{\delta f\lvert m(t)-x(t)\rvert^2}{\delta B_{QD}} =$ | $+2\mathrm{Re}\{-je^{+2j\omega_0 t}\}$ | $+2\mathrm{Re}\{-jje^{+2j\omega_0 t}\}$ | 0 | 2 | $+2\mathrm{Re}\{je^{-j\omega_0 t}\}$ | $+2\mathrm{Re}\{-jje^{-j\omega_0 t}\}$ | $-2\mathrm{Re}\{-j\cdot m(t)\cdot e^{+j\omega_0 t}\}$ |
| $\dfrac{\delta f\lvert m(t)-x(t)\rvert^2}{\delta C_{ID}} =$ | $+2\mathrm{Re}\{e^{+j\omega_0 t}\}$ | $+2\mathrm{Re}\{je^{+j\omega_0 t}\}$ | $+2\mathrm{Re}\{e^{-j\omega_0 t}\}$ | $+2\mathrm{Re}\{je^{-j\omega_0 t}\}$ | 2 | 0 | $-2\mathrm{Re}\{m(t)\}$ |
| $\dfrac{\delta f\lvert m(t)-x(t)\rvert^2}{\delta C_{QD}} =$ | $+2\mathrm{Re}\{-je^{+j\omega_0 t}\}$ | $+2\mathrm{Re}\{-jje^{+j\omega_0 t}\}$ | $+2\mathrm{Re}\{-je^{-j\omega_0 t}\}$ | $+2\mathrm{Re}\{-jje^{-j\omega_0 t}\}$ | 0 | 2 | $-2\mathrm{Re}\{-j\cdot m(t)\}$ |

Fig. 5

(32)

EP 1 626 516 B1

$$\int_0^T \bar{A}(t)dt = \begin{pmatrix}
T & 0 & +\frac{1}{2\omega}(\sin 2\omega T) & -\frac{1}{2\omega}(\cos 2\omega T-1) & +\frac{1}{\omega}(\sin \omega T) & -\frac{1}{\omega}(\cos \omega T-1) \\
0 & T & +\frac{1}{2\omega}(\cos 2\omega T-1) & +\frac{1}{\omega}(\sin 2\omega T) & +\frac{1}{\omega}(\cos \omega T-1) & +\frac{1}{\omega}(\sin \omega T) \\
+\frac{1}{2\omega}(\sin 2\omega T) & +\frac{1}{2\omega}(\cos 2\omega T-1) & T & 0 & +\frac{1}{\omega}(\sin \omega T) & +\frac{1}{\omega}(\cos \omega T-1) \\
-\frac{1}{2\omega}(\cos 2\omega T-1) & +\frac{1}{2\omega}(\sin 2\omega T) & 0 & T & -\frac{1}{\omega}(\cos \omega T-1) & +\frac{1}{\omega}(\sin \omega T) \\
+\frac{1}{\omega}(\sin \omega T) & +\frac{1}{\omega}(\cos \omega T-1) & +\frac{1}{\omega}(\sin \omega T) & -\frac{1}{\omega}(\cos \omega T-1) & T & 0 \\
-\frac{1}{\omega}(\cos \omega T-1) & +\frac{1}{\omega}(\sin \omega T) & +\frac{1}{\omega}(\cos \omega T-1) & +\frac{1}{\omega}(\sin \omega T) & 0 & T
\end{pmatrix}$$

$$(43)$$

**Fig. 6**

EP 1 626 516 B1